(19) Europäisches Patentamt
European Patent Office
Office européen des brevets

(11) **EP 3 340 342 B1**

(12) **EUROPEAN PATENT SPECIFICATION**

(45) Date of publication and mention
of the grant of the patent:
**28.10.2020  Bulletin 2020/44**

(51) Int Cl.:
**H01M 2/16** (2006.01)        **H01M 10/052** (2010.01)
**H01M 10/0587** (2010.01)

(21) Application number: **17208388.3**

(22) Date of filing: **19.12.2017**

(54) **SEPARATOR FOR POWER STORAGE DEVICE, LAMINATED BODY, ROLL, LITHIUM-ION SECONDARY BATTERY OR POWER STORAGE DEVICE USING IT**

SEPARATOR FÜR STROMSPEICHERVORRICHTUNG, LAMINIERTER KÖRPER, ROLLE, LITHIUM-IONEN-SEKUNDÄRBATTERIE ODER STROMSPEICHERVORRICHTUNG MIT VERWENDUNG DAVON

SÉPARATEUR POUR DISPOSITIF DE STOCKAGE D'ÉNERGIE, CORPS STRATIFIÉ, ROULEAU, BATTERIE SECONDAIRE LITHIUM-ION OU DISPOSITIF DE STOCKAGE D'ÉNERGIE L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.12.2016  JP 2016246738**
**17.11.2017  JP 2017222073**

(43) Date of publication of application:
**27.06.2018  Bulletin 2018/26**

(73) Proprietor: **Asahi Kasei Kabushiki Kaisha Tokyo 100-0006 (JP)**

(72) Inventor: **Okuda, Toshiaki Tokyo, 101-8101 (JP)**

(74) Representative: **dompatent von Kreisler Selting Werner -
Partnerschaft von Patent- und Rechtsanwälten mbB
Deichmannhaus am Dom
Bahnhofsvorplatz 1
50667 Köln (DE)**

(56) References cited:
**EP-A1- 3 159 163          EP-A2- 2 626 942
US-A1- 2009 098 450    US-A1- 2011 045 338**

**Description**

BACKGROUND OF THE INVENTION

Field of the Invention

The present invention relates to a separator for a power storage device.

Related Background Art

Power storage devices such as lithium-ion secondary batteries have been undergoing active development in recent years. A power storage device is usually designed with a microporous film (separator) between positive and negative electrodes. The separator has the function of preventing direct contact between the positive and negative electrodes, while also allowing ions to pass through the electrolyte solution that is held in the micropores.

The separator is closely associated with the battery characteristic, battery productivity and battery safety, and it must have excellent permeability, mechanical properties, impedance properties, pore clogging properties (shutdown properties) and film melt-fracture-preventing properties (anti-meltdown properties).

In order to meet this need, it has been attempted in the past to laminate different types of modified porous films on the microporous substrate composing the separators.

PTL 1, for example, discloses a polyolefin multilayer microporous film composed of a first microporous layer comprising polypropylene and a second microporous layer comprising ultrahigh molecular weight polyethylene, and having another layer on the surface of at least one of the porous layers (the other layer being a fluorine-containing resin which may be a polymer or copolymer of polyvinylidene fluoride (PVDF) or polytetrafluoroethylene (PTFE)), with a specific porosity/film thickness and gas permeability, and the Examples of this publication describe a microporous layer having a dense pore structure with high through-hole diameter uniformity, and also with low gas permeability, maintaining a satisfactory balance between high porosity and mechanical strength even when given form to a thin film, while also exhibiting excellent impedance properties.

In addition, PTL 2 discloses a polyolefin multilayer microporous film having specific ranges for the static friction coefficient and pore density of one side with respect to the other side of the surface layers comprising polyethylene and polypropylene in the polyolefin multilayer microporous film, and in the provided examples it describes a multilayer microporous film having satisfactory slidability between films and high durability (voltage resistance and electrochemical stability), due to a dense pore structure.

PTL 3 discloses a battery separator which has a modified porous layer made of PVDF, laminated on a polyethylene microporous film having a specified number of bumps composed of polyethylene arranged in an irregular fashion, whereby it exhibits no peeling of the modified porous layer even when subjected to high-speed transport.

In addition, PTL 4 discloses that a composite porous film, formed by laminating a porous film comprising a heat-resistant resin layer that includes a PVDF layer, on a porous film having a mechanically strong and compression-resistant polypropylene resin layer as the uppermost surface layer, exhibits an excellent shutdown function, and also that because it has a laminated fluorine-based resin layer it exhibits both the excellent adhesiveness and low increase in air permeability resistance of the fluorine-based resin layer, the porous film being described as particularly suitable for use as a battery separator.

[Citation List]

[Patent Literature]

[PTL 1] International Patent Publication No. WO2015/194667
[PTL 2] International Patent Publication No. WO2013/146403
[PTL 3] International Patent Publication No. WO2015/190264
[PTL 4] Japanese Unexamined Patent Publication No. 2012-061791

US 2011/045338 A1 discloses a separator including a porous substrate having a plurality of pores; and a porous coating layer formed on at least one surface of the porous substrate and made of a mixture of a plurality of inorganic particles and a binder polymer, wherein the binder polymer includes a first polyvinylidene fluoride-based copolymer having solubility of 25 weight % or more with respect to acetone at 350 °C; a second polyvinylidene fluoride-based copolymer having solubility of 10 weight % or less with respect to acetone at 350 °C; and a polymer having a cyano group.

US 2009/098450 A1 discloses 1) a combination of a microporous layer made of a polyethylene resin and a microporous layer made of polypropylene and a heat-resistant resin having a melting point or a glass transition temperature of 170 °C or higher, and (2) a combination of a microporous layer made of a polyethylene resin and a microporous layer made of polypropylene and inorganic filler having an aspect ratio of 2 or more, thus providing a multi-layer, microporous polyolefin membrane with well-balanced permeability, mechanical strength, heat shrinkage resistance, shutdown properties and meltdown properties.

SUMMARY OF THE INVENTION

With increasing interest in ecological issues in recent years, not only has the demand for hybrid vehicles increased, but full electric vehicles have been appearing on the market, and such vehicles are becoming more frequently used throughout the world. Battery separators must therefore naturally exhibit performance that is suitable for the place of destination, but in particular there has been a need for improvement in the durability of separators in cold climates. However, the conventional separators disclosed in PTL 1 to 4 are not designed with these factors in consideration, and separators have been desired that can be used in locations of the world with colder climates.

In light of these circumstances, it is an object of the present invention to provide a separator for a power storage device that exhibits the basic properties required for a conventional separator, and particularly peel strength between the substrate and modified layers, as well as excellent battery windability when the separator is wound into a circular cylindrical battery and, in addition, an excellent thermal shock property and low-temperature cycle characteristic, with satisfactory balance between the different aspects of its performance.

The present inventors have found that the problem can be solved by the following technical means, and the invention has thereupon been completed.

Specifically, the present invention provides the following.

   1.A separator for a power storage device, wherein the separator is characterized by comprising:

      a polyolefin multilayer microporous film comprising polyethylene and polypropylene, the polypropylene concentration at the outermost sections being higher than the polypropylene concentration at the innermost: section, and the polyethylene concentration at the outermost sections being lower than the polyethylene concentration at the innermost section, wherein the outermost sections of the polyolefin multilayer microporous film are the cross-sectional portions of the two outer films, when the multi-layer microporous film has been divided into 3 portions of equal thickness in the direction of lamination, and the innermost section is the cross-sectional portion of the film on the inside, and
      an active layer laminated on at least one side of the microporous film,
      wherein the active layer contains inorganic particles and at least one fluorine-containing vinyl compound selected from polyvinylidene-hexafluoropropylene fluoride (PVdF-HFP) and polyvinylidene fluoride-chlorotrifluoroethylene (PVdF-CTFE),
      wherein the polyolefin multilayer microporous film is laminated in the order of a first microporous layer, a second microporous layer and a first microporous layer,
      wherein each first microporous layer contains polyethylene and polypropylene,
      wherein the second microporous layer contains polyethylene,
      wherein the proportion of polypropylene with respect to 100 weight% as the total polyolefin resin in the first microporous layer is 1 to 50 weight%, and
      wherein the ratio of the weight-average molecular weights of the polyethylene and polypropylene in the first microporous layer adhering to the active layer determined as described in the description and calculated using the formula
      MwE (weight-average molecular weight of polyethylene)/MwP (weight-average molecular weight of polypropylene)
      is 0.6 to 1.5.

   2. The separator for a power storage device according to 1, wherein the proportion of polypropylene with respect to 100 weight% as the total polyolefin resin in the first microporous layer is 5 to 50 weight%.
   3. The separator for a power storage device according to 1 or 2, wherein the first polyolefin resin or the second polyolefin resin comprises linear low-density polyethylene.
   4. The separator for a power storage device according to 3, wherein the linear low-density polyethylene is poly(ethylene-co-1-hexene).
   5. The separator for a power storage device according to any one of 1 to 4, wherein the first microporous layer further comprises one or more selected from the group consisting of silica, alumina and titania.

6. The separator for a power storage device according to any one of 1 to 5, wherein, the weight ratio of the fluorine-containing vinyl compound and the inorganic particles is 5/95 to 80/20.

7. The separator for a power storage device according to any one of 1 to 6, wherein the active layer further contains at least one selected from among cyanoethylpullulan, cyanoethylpolyvinyl alcohol, cyanoethyl cellulose and cyanoethylsucrose.

8. A laminated body comprising the separator for a power storage device according to any one of 1 to 7, a positive electrode, and a negative electrode.

9. A roll in which the laminated body according to 8 is wound.

10. A secondary battery comprising the laminated body according to 8 or the roll according to 9, and an electrolyte solution.

11. Use of a polyolefin multilayer microporous film comprising polyethylene and polypropylene, the polypropylene concentration at the outermost sections being higher than the polypropylene concentration at the innermost section, and the polyethylene concentration at the outermost sections being-lower than the polyethylene concentration at the innermost section, wherein the outermost sections of the polyolefin multilayer microporous film are the cross-sectional portions of the two outer films, when the multi-layer microporous film. has been divided into 3 portions of equal thickness in the direction of lamination, and the innermost section is the cross-sectional portion of the film on the inside and

an active layer laminated on at least one side of the microporous film,

wherein the active layer contains inorganic particles and at least one fluorine-containing vinyl compound selected from polyvinylidene-hexafluoropropylene fluoride (PVdF-HFP) and polyvinylidene fluoride-chlorotrifluoroethylene (PVdF-CTFE),

wherein the polyolefin multilayer microporous film is laminated in the order of a first microporous layer, a second microporous layer and a first microporous layer,

wherein each first microporous layer contains polyethylene and polypropylene,

wherein the second, microporous layer contains polyethylene,

wherein the proportion of polypropylene with respect to 100 weight% as the total polyolefin resin in the first microporous layer is 1 to 50 weight%, and

wherein the ratio of the weight-average molecular weights of the polyethylene and polypropylene in the first microporous layer adhering to the active layer determined as described in the description and calculated using the formula MwE (weight-average molecular weight of polyethylene)/MwP (weight-average molecular weight of polypropylene) is 0.6 to 1.5, as a separator in a power storage device.

According to the invention it is possible to provide a separator for a power storage device that exhibits excellent performance not only in terms of peel strength between the active layer and the substrate, and battery windability, but also the thermal shock properties and low-temperature cycle characteristic, as compared to a conventional separator, and that also has a satisfactory balance between the different aspects of its performances.

BRIEF DESCRIPTION OF THE DRAWINGS

Fig. 1(A) is an illustration showing the overall construction of a manual winding machine used to determine the peel strength between the active layer and polyolefin multilayer microporous film, and Fig. 1(B) is an illustration showing the construction of the roll section.

Fig. 2 is a schematic diagram of an apparatus used to carry out the impact test.

DETAILED DESCRIPTION OF THE INVENTION

<Separator for a power storage device>

The separator for a power storage device according to the invention comprises a polyolefin multilayer microporous film comprising polyethylene and polypropylene, the polypropylene concentration at the outermost sections being higher than the polypropylene concentration at the innermost section, and the polyethylene concentration at the outermost sections being lower than the polyethylene concentration at the innermost section, and an active layer laminated on at least one side of the microporous film. The outermost sections of the polyolefin multilayer microporous film are the cross-sectional portions of the two outer films, when the multilayer microporous film has been divided into 3 portions of equal thickness in the direction of lamination, and the innermost section is the cross-sectional portion of the film on the inside. Specifically, the separator of the present invention is as defined in claim 1. In a preferred mode of the separator for a power storage device of the invention, the separator comprises a polyolefin multilayer microporous film and an active layer, and the multilayer microporous film comprises at least a first microporous layer and a second microporous layer, the first microporous layer consisting of a first polyolefin resin containing polyethylene and polypropylene, the second microporous layer consisting

of a polyolefin resin that is different from the first polyolefin resin containing polyethylene, and the multilayer microporous film being laminated in the order: first microporous layer, second microporous layer, first microporous layer.

By having an active layer bound onto a porous film by a step of coating the active layer onto at least one of the polyolefin multilayer microporous film layers, wherein both of the outer layers among the three layers in this laminating order are first microporous layers, the separator is less likely to suffer reduced ion permeability, and a power storage device with a high output characteristic can be obtained. Moreover, even with rapid temperature increase that occurs during abnormal heat release, a smooth shutdown property is exhibited and a high degree of safety can be obtained more easily.

Furthermore, since the outer layers of the polyolefin multilayer microporous film are films containing polyethylene and polypropylene, the peel strength with respect to the active layer laminated on the outer layers is increased. The presence of both polypropylene and polyethylene increases the surface free energy on the layer surface compared to polyethylene alone, due to the polar effect of polypropylene, and thus increases the adhesive force with the active layer. In addition, it is thought that by laminating films containing polyethylene and polypropylene on the outer layers, a satisfactory low-temperature characteristic, and especially low-temperature cycle property, is obtained as a feature of the separator of this embodiment, and that compared to polypropylene alone which has a glass transition temperature of near 0°C, the blend lowers the transition temperature, making brittle fracture of the material less likely to occur.

The separator for a power storage device comprises an active layer laminated on at least one polyolefin multilayer microporous film. With the active layer, adhesive force between the active layer and the adhesive layer on the electrode side is stronger, in particular resulting in satisfactory thermal shock properties at low temperatures, as described below.

Thus, although the separator may consist entirely of the polyolefin multilayer microporous film and the active layer, for even greater peel strength it may additionally have a thermoplastic polymer layer (described in detail below). When an active layer and a thermoplastic polymer layer are laminated on the polyolefin multilayer microporous film, their mutual positional relationship may be as desired, but from the viewpoint of both rate properties and safety of the power storage device, the thermoplastic polymer layer may be laminated in such a manner that at least a portion of the active layer is exposed, and it is preferably laminated over the active layer.

The members forming the separator for a power storage device of this embodiment, and preferred embodiments of the method for producing the separator for a power storage device, will now be explained in detail.

[Polyolefin multilayer microporous film]

The polyolefin multilayer microporous film to be used for this embodiment (hereunder referred to as "polyolefin porous substrate") is preferably a porous film with fine pore diameters, having ionic conductivity without electrical conductivity, and also high resistance to organic solvents.

The polyolefin multilayer microporous film (polyolefin porous substrate) of this embodiment comprises at least a first polyolefin microporous layer and a second polyolefin microporous layer, the first microporous layer containing polyethylene and polypropylene, and the second microporous layer containing polyethylene.

The polyolefin porous substrate has the first microporous layer, second microporous layer and first microporous layer laminated in that order, for excellent mechanical properties, shutdown properties and meltdown properties as a separator substrate, with a balance being maintained between the properties, the first layer containing polyethylene and polypropylene and the second layer containing polyethylene, whereby the separator exhibits the desirable excellent property balance between mechanical properties, shutdown properties and meltdown properties.

The polyethylene and polypropylene in the first microporous layer are not particularly restricted, and examples include low-density polyethylene, linear low-density polyethylene, medium-density polyethylene, high-density polyethylene (HDPE), ultrahigh molecular weight polyethylene (UHMwPE), isotactic polypropylene, atactic polypropylene, ethylene-propylene random copolymer and ethylene-propylene rubber. The polymerization catalyst used for production of the polyethylene or polypropylene is not particularly restricted, and examples include Ziegler-Natta catalysts, Phillips catalysts and metallocene-based catalysts.

From the viewpoint of the impact resistance of the power storage device, the first polyolefin resin preferably further comprises linear low-density polyethylene in addition to the polyethylene mentioned above. The first polyolefin resin more preferably further comprises linear low-density polyethylene in addition to high-density polyethylene (HDPE). Linear low-density polyethylene is more preferably poly(ethylene-co-hexene) copolymer, for example.

Among the polypropylene compounds mentioned above, the first polyolefin resin used is more preferably isotactic polypropylene, syndiotactic polypropylene or atactic polypropylene, which have spatial structures and can improve the heat resistance of the separator, from the viewpoint of peel strength between the active layer and the substrate.

Most preferably, the first microporous layer further comprises polypropylene with a heat of fusion of no greater than 150 J/g, since this will increase the amorphous portion of the polypropylene and further improve the impact resistance of the power storage device.

The proportion of polypropylene with respect to 100 weight% as the total polyolefin resin in the first microporous layer from the viewpoint of peel strength between the active layer and substrate, and the thermal shock properties and low-temperature cycle characteristic) is 1 to 50 weight%, preferably 5 to 40 weight% and more preferably 15 to 35 weight%. A particularly preferred is in a range of 15 to less than 30 weight%.

There is no particular restriction on the proportion of polyolefin resin with respect to 100 weight% of the polyolefin resin composition in the first microporous layer, but from the viewpoint of gas permeability, heat resistance and a satisfactory shutdown function, it is preferably 50 to 100 weight%, more preferably 60 to 100 weight% and even more preferably 70 to 100 weight%. The polymerization catalyst is also not particularly restricted, and a Ziegler-Natta catalyst or metallocene-based catalyst, for example, may be used. The first microporous layer more preferably further comprises one or more compounds selected from among silica, alumina and titania, from the viewpoint of affinity of the separator with non-aqueous electrolyte solutions, power output retentivity, and the low-temperature cycle characteristic explained below.

The proportion of silica, alumina and titania in the first microporous layer is preferably 5 weight% or greater, more preferably 10 weight% or greater and even more preferably 20 weight% or greater, and preferably no greater than 90 weight%, more preferably no greater than 80 weight% and even more preferably no greater than 70 weight%, with respect to 100 weight% of the first polyolefin resin in the first microporous layer. Such proportions are preferred from the viewpoint of obtaining satisfactory heat resistance, and from the viewpoint of improving the drawability to obtain a porous film with high piercing strength.

The second microporous layer of this embodiment will now be described.

The second micropore layer comprises a second polyolefin resin that is different from the first polyolefin resin, and contains polyethylene. The polyethylene is not particularly restricted, and examples include low-density polyethylene, linear low-density polyethylene (L-LDPE), medium-density polyethylene, high-density polyethylene (HDPE) and ultrahigh molecular weight polyethylene (UHMwPE). From the viewpoint of strength and heat resistance, the polyethylene in the polyolefin resin of the second micropore layer is preferably high-density polyethylene or ultrahigh molecular weight polyethylene. It more preferably further comprises linear low-density polyethylene in addition to the high-density polyethylene and ultrahigh molecular weight polyethylene, from the viewpoint of impact resistance of the power storage device. Linear low-density polyethylene is more preferably poly(ethylene-co-hexene) copolymer, for example. A single type of polyethylene may be used alone, or two or more types may be used in combination to impart softness.

From the viewpoint of mold processing stability, mechanical strength, and gas permeability of thin-films, the polyethylene content of the polyolefin resin in the second micropore layer is preferably 50 weight% to 100 weight%, more preferably 60 weight% to 100 weight% and even more preferably 70 weight% to 95 weight%, with 100 weight% as the total mass of the second polyolefin resin.

The polyolefin resin in the second micropore layer may further include polypropylene. It preferably comprises polypropylene with a heat of fusion of no greater than 150 J/g, since this will increase the amorphous portion of the polypropylene and result in more satisfactory impact resistance of the power storage device.

The aforementioned linear low-density polyethylene or polypropylene with a heat of fusion of no greater than 150 J/g is preferably included in the second polyolefin resin rather than in the first polyolefin resin, from the viewpoint of the impact resistance of the power storage device. While the mechanism is not understood in complete detail, it is conjectured that the impact resistance of the power storage device is satisfactory when the layer comprising linear low-density polyethylene or polypropylene with a heat of fusion of no greater than 150 J/g is thicker than the other layers, or when the layer comprising linear low-density polyethylene or polypropylene with a heat of fusion of no greater than 150 J/g is further separated away from the electrodes (other layers are present between them).

The first and second microporous layers of this embodiment may also be porous film layers composed of polyolefin resin compositions comprising polyolefin resins other than the resins mentioned above, in order to obtain more satisfactory thermal shock properties as well as a more satisfactory balance between the properties of low-temperature cycle characteristic, heat resistance, impact resistance and peel strength between the substrate and active layer. Olefin resins to be used in the first and second layers are not particularly restricted, and may be polyolefin resins used in common extrusion, ejection, inflation and blow molding processes, including homopolymers and copolymers such as 1-butene, 4-methyl-1-pentene, 1-hexene and 1-octene, or multi-stage polymers. Polyolefins selected from the group consisting of these homopolymers and copolymers or multistage polymers may be used alone, or they may be used in admixture.

The weight-average molecular weight of the polyethylene or polypropylene in the first and second microporous layers is not particularly restricted, but is preferably from 30,000 to 12,000,000, more preferably at least 50,000 and less than 2,000,000, and even more preferably at least 100,000 and less than 1,000,000. If the weight-average molecular weight is 30,000 or greater, the melt tension during melt molding will be increased, resulting in satisfactory moldability, while the strength will also tend to be high due to entanglement between the polymers. The weight-average molecular weight is also preferably no greater than 12,000,000 because it will be easier to accomplish uniform melt-kneading, and the sheet moldability, and especially its thickness stability, will tend to be superior. The weight-average molecular weight is also preferably lower than 1,000,000 because the pores will be easily clogged during temperature increase, and a satisfactory shutdown function will tend to be obtained.

As mentioned above, the polyolefin multilayer microporous film (polyolefin porous substrate) of this embodiment has the first microporous layer, second microporous layer and first microporous layer laminated in that order, but for a separator having an active layer additionally coated thereover and disposed on the polyolefin porous substrate, preferably in the present technology the ratio of the weight-average molecular weight of polyethylene (MwE) and the weight-average molecular weight of polypropylene (MwP) (MwE/MwP) in the first microporous layer adhering to the active layer is 0.6 to 1.5, from the viewpoint of reducing variation in peel strength between the first microporous layer and the active layer. In the invention as claimed, MwE/MwP in the first microporous layer adhering to the active layer is 0.6 to 1.5. The following is conjectured to be the reason why variation in the peel strength is reduced when the ratio of MwE/MwP in the first layer is within this range: When the ratio is within the prescribed range (near 1), the difference in molecular weights of polyethylene and polypropylene is reduced and the compatibility is more satisfactory, such that macrophase separation is less likely to take place. This reduces maldistribution of polyethylene-rich portions or polypropylene-rich portions at the bonding interface of the first layer with the active layer, thereby lowering the ratio of both due to the bonded sections. Furthermore, the adhesive force of polypropylene is not the same as that of polyethylene, presumably resulting in less variation in adhesive force (peel strength) between the active layer and substrate.

A specific method for producing a polyolefin porous substrate will now be described.

The above explanation concerned a polyolefin porous substrate with a three-layer micropore structure of first-second-first (according to the invention), but the porous substrate of the present technology may have more than three layers, in which case, similarly, the polypropylene concentration at the outermost sections is higher than the polypropylene concentration at the innermost section, and the polyethylene concentration at the outermost sections is lower than the polyethylene concentration at the innermost section. As mentioned above, the outermost sections referred to here are the two films on the outside, when the multilayer film has been divided into 3 portions of equal thickness in the direction of lamination, and the innermost section is the film on the inside. The constituent components of each film can be analyzed by infrared spectroscopy or liquid chromatography (for example, GPC).

The polyolefin porous substrate of this embodiment may also contain optional additives. Such additives are not particularly restricted and examples include polymers other than polyolefins; inorganic particles; phenol-based, phosphorus-based and sulfur-based antioxidants; metal soaps such as calcium stearate and zinc stearate; ultraviolet absorbers; light stabilizers; antistatic agents; anti-fogging agents; and color pigments.

The total content of additives is no greater than 20 parts by weight, more preferably no greater than 10 parts by weight and even more preferably no greater than 5 parts by weight, with respect to 100 parts by weight of the polyolefin resin.

The porosity of the polyolefin porous substrate material of this embodiment is not particularly restricted but is preferably 20% or greater and more preferably 35% or greater, and preferably no greater than 90% and more preferably no greater than 80%. The porosity is preferably 20% or greater from the viewpoint of ensuring the permeability of the separator. The porosity is also preferably no greater than 90% from the viewpoint of ensuring piercing strength. The porosity can be calculated by the following formula:

$$\mathtt{Porosity\ =\ (volume\ -\ weight/film\ density)/volume\ \times\ 100,}$$

based on the volume (cm$^3$), weight (g) and film density (g/cm$^3$) of a measuring sample of the polyolefin porous substrate. When the polyolefin multilayer microporous film is composed of polyethylene, for example, calculation may be performed assuming a film density of 0.95 (g/cm$^3$). When the multilayer microporous film is composed of polyethylene and polypropylene, the same calculation can be performed from their respective film densities. The porosity can be adjusted by changing the draw ratio of the polyolefin multilayer microporous film.

The gas permeability of the polyolefin porous substrate of this embodiment is not particularly restricted, but is preferably 10 seconds/100cm$^3$ or greater and more preferably 50 seconds/100cm$^3$ or greater, and preferably no greater than 1,000 seconds/100 cm$^3$ and more preferably no greater than 500 seconds/100 cm$^3$. The gas permeability is preferably 10 seconds/100 cm$^3$ or greater from the viewpoint of minimizing self-discharge of the power storage device. The gas permeability is also preferably no greater than 1,000 seconds/100 cm$^3$ from the viewpoint of obtaining a satisfactory charge-discharge characteristic. The gas permeability referred to here is the air permeability resistance measured according to JIS P-8117. The gas permeability can be adjusted by changing the drawing temperature and/or draw ratio of the porous substrate.

The mean pore size of the polyolefin porous substrate of this embodiment is preferably no greater than 0.15 $\mu$m and more preferably no greater than 0.1 $\mu$m, with a preferred lower limit of 0.01 $\mu$m. A mean pore size of no greater than 0.15 $\mu$m is preferred from the viewpoint of minimizing self-discharge of the power storage device and helping to prevent reduction in capacity. The mean pore size can be adjusted by changing the draw ratio during production of the polyolefin porous substrate.

The piercing strength of the polyolefin porous substrate of this embodiment is not particularly restricted, but is preferably 200 g/20 $\mu$m or greater and more preferably 300 g/20 $\mu$m or greater, and preferably no greater than 2,000 g/20 $\mu$m and more preferably no greater than 1,000 g/20 $\mu$m. The piercing strength is preferably 200 g/20 $\mu$m or greater from the viewpoint of minimizing film rupture when the active material is shed during battery winding, and from the viewpoint of concerns of short circuiting by expansion and contraction of the electrodes that occurs with charge-discharge. On the other hand, the piercing strength is preferably no greater than 2,000 g/20 $\mu$m from the viewpoint of reducing width contraction caused by relaxation of the orientation during heating. The piercing strength is measured by the method described in the examples below.

The piercing strength can be adjusted by setting the draw ratio and/or drawing temperature of the polyolefin porous substrate.

The thickness of the polyolefin porous substrate of this embodiment is not particularly restricted, but is preferably 2 $\mu$m or greater and more preferably 5 $\mu$m or greater, and preferably no greater than 100 $\mu$m, more preferably no greater than 60 $\mu$m and even more preferably no greater than 50 $\mu$m. The thickness is preferably adjusted to 2 $\mu$m or greater from the viewpoint of increasing the mechanical strength. The film thickness is also preferably adjusted to no greater than 100 $\mu$m because this will reduce the volume of the battery occupied by the separator, which is advantageous for increasing the capacity of the battery.

<Active layer>

(Fluorine-containing vinyl compound)

The active layer of this embodiment comprises a fluorine-containing vinyl compound and inorganic particles, and is laminated on the first microporous layer.

By providing an active layer on the polyolefin multilayer microporous film as the substrate, the battery windability and the thermal shock properties of the power storage device will be more excellent than with the substrate alone.

By having an active layer bound onto the porous substrate by a step of coating the active layer onto the first microporous layer, i.e. onto the polyolefin porous substrate, the separator is less likely to suffer reduced ion permeability, and a power storage device with a high output characteristic can be obtained. Moreover, even with rapid temperature increase that occurs during abnormal heat release, a smooth shutdown property is exhibited and a high degree of safety can be obtained more easily.

The fluorine-containing vinyl compound (hereunder also referred to as "fluorine-based resin" or "binder") is at least one selected from polyvinylidene-hexafluoropropylene fluoride (high-molecular PVdF-HFP) and polyvinylidene fluoride-chlorotrifluoroethylene (high-molecular PVdF-CTFE). Copolymerizing hexafluoropropylene or chlorotrifluoroethylene with vinylidene fluoride can control the crystallinity of the fluorine-based resin to within a suitable range, thereby helping to minimize shifting of the active layer during the process of bonding to the electrode.

Moreover, since the adhesive force is increased during the procedure of bonding to the electrode, interfacial shifting is less likely to occur when the separator is used for a secondary battery, and the thermal shock properties are improved. The fluorine-based resin can usually be obtained by emulsion polymerization or suspension polymerization.

The weight-average molecular weight of the fluorine-based resin is preferably from $0.6 \times 10^6$ to $2.5 \times 10^6$. The weight-average molecular weight of the fluorine-based resin is preferably within this range because the thermal shock properties will be satisfactory (less expansion and shrinkage during heating and cooling is thought to reduce the likelihood of detachment between the active layer and the substrate).

The fluorine-based resin, i.e. the high-molecular PVdF-HFP or high-molecular PVdF-CTFE, preferably has a percentage of structural units from HFP or CTFE that is in the range of 2.0 weight% to 20.0 weight%. If the HFP or CTFE content is at least 2.0 weight%, extreme crystallization of the fluorine-based resin will be inhibited, and if the HFP or CTFE content is no greater than 20.0 weight%, the fluorine-based resin will undergo crystallization to a suitable extent. The HFP or CTFE content is also preferably no greater than 20.0 weight% in order to help ensure the thermal shock properties.

From this viewpoint, the percentage of structural units from HFP or CTFE in the high-molecular PVdF-HFP or high-molecular PVdF-CTFE is more preferably 2.25 weight% or greater and even more preferably 2.5 weight% or greater, and more preferably no greater than 18 weight% and even more preferably no greater than 15 weight%.

When the separator that includes the active layer is impregnated with an electrolyte solution, the degree of swelling of the resin in the separator differs depending on the type of resin and the composition of the electrolyte solution, and in order to reduce the inconveniences associated with such swelling of the resin, it is preferred to select one of the aforementioned fluorine-based resins that is resistant to swelling.

The active layer more preferably includes a polymer with any one or two or more polar groups selected from the group consisting of hydroxyl (-OH), carboxyl (-COOH), maleic anhydride (-COOOC-), sulfonic acid (-SO$_3$H), and pyrrolidone (-NCO-), since this will improve the low-temperature cycle characteristic of the separator. Such polymers include one or more polymers selected from among cyanoethylpullulan, cyanoethylpolyvinyl alcohol, cyanoethyl cellulose and cyanoethylsucrose.

It is believed that the improvement in the low-temperature cycle characteristic of the separator when the active layer includes a polymer with any of these polar groups is due to lowering of the resistance of the separator at low temperature, because of the high relative dielectric constant of such polymers.

Polymers with polar groups that have a relative dielectric constant of from 1 to 100 (measuring frequency = 1 kHz) are suitable for use, with the constant of 10 or greater being particularly preferred.

The active layer may also contain the following resins in addition to the resins mentioned above, so long as the properties exhibited by the separator of this embodiment are not impaired. Such resins include, but are not limited to, polyvinylidene fluoride, polyvinylidene fluoride-trichloroethylene, polymethyl methacrylate, polyacrylonitrile, polyvinyl acetate, ethylene-vinyl acetate copolymer, polyimide and polyethylene oxide, and these may be used either alone or in mixtures of two or more.

(Inorganic particles)

The inorganic particles used in the active layer are not particularly restricted, but preferably they have a melting point of 200°C or higher and also high electrical insulating properties, and are also electrochemically stable in the range in which the lithium-ion secondary battery is to be used.

The inorganic particles are not particularly restricted, and examples include oxide-based ceramics such as alumina, silica, titania, zirconia, magnesia, ceria, yttria, zinc oxide and iron oxide; nitride-based ceramics such as silicon nitride, titanium nitride and boron nitride; ceramics such as silicon carbide, calcium carbonate, magnesium sulfate, aluminum sulfate, aluminum hydroxide, aluminum hydroxide oxide, potassium titanate, talc, kaolinite, dickite, nacrite, halloysite, pyrophyllite, montmorillonite, sericite, mica, amesite, bentonite, asbestos, zeolite, calcium silicate, magnesium silicate, diatomaceous earth and quartz sand; and glass fibers. They may be used alone, or more than one type may be used together.

Preferred among those mentioned above, from the viewpoint of improving the electrochemical stability and the heat-resistant properties of the separator, are aluminum silicate compounds without ion-exchange properties, which include aluminum oxide compounds such as alumina and aluminum hydroxide oxide; as well as kaolinite, dickite, nacrite, halloysite and pyrophyllite.

Alumina types include a large number of crystalline forms such as a-alumina, β-alumina, γ-alumina and θ-alumina, any of which are suitable for use. Because α-alumina is thermally and chemically stable, it is preferably used.

Aluminum hydroxide oxide (AlO(OH)) is particularly preferred as an aluminum oxide compound. Boehmite is a more preferred aluminum hydroxide oxide from the viewpoint of preventing internal short circuiting caused by generation of lithium dendrites. If particles composed mainly of boehmite are used as the inorganic particles of the active layer, it will be possible to obtain an exceedingly lightweight porous layer while maintaining high permeability, and heat shrinkage of the porous film at high temperature will tend to be inhibited and excellent heat resistance exhibited, even with a thin porous layer. Synthetic boehmite is even more preferred because it can reduce ionic impurities that may adversely affect the properties of electrochemical devices.

Kaolin composed mainly of kaolin mineral is more preferred as an aluminum silicate compound without ion-exchange properties, because it is inexpensive and readily available. Wet kaolin, and calcined kaolin obtained by its burning, are known types of kaolin. Calcined kaolin is particularly preferred for this embodiment. Calcined kaolin is especially preferred from the viewpoint of electrochemical stability, because the crystallized water has already been released during burning, and the impurities have also been removed.

The mean particle diameter of the inorganic particles is preferably at least 0.01 μm and no greater than 4.0 μm, more preferably at least 0.2 μm and no greater than 3.5 μm, and even more preferably at least 0.4 μm and no greater than 3.0 μm. Adjusting the mean particle diameter of the inorganic particles to within this range is preferred from the viewpoint of minimizing heat shrinkage at high temperature even when the active layer has a small thickness (for example, 7 μm or smaller). The method of adjusting the particle diameters of the inorganic particles and the distribution thereof, may be, for example, a method of pulverizing the inorganic particles using a suitable pulverizing apparatus such as a ball mill, bead mill or jet mill to reduce their particle diameters.

Examples for the shapes of the inorganic particles include plate-like, scaly, needle-like, columnar, spherical, polyhedral and globular. Different types of inorganic fillers with such shapes may also be combined.

The proportion of the fluorine-based resin and the inorganic particles in the active layer of this embodiment is preferably fluorine-based resin/inorganic particles = 5/95 to 80/20, more preferably 7/93 to 65/35 and even more preferably 9/91 to 50/50. The fluorine-based resin/inorganic particle proportion is preferably within this range for particularly satisfactory battery windability as described below. For example, when polyvinylidene-hexafluoropropylene fluoride (PVdF-HFP) is used as the fluorine-based resin, the resin dissolves out from the film surface due to the characteristic tribomaterial effect of this resin, lowering the contact resistance with the pin in a battery windability test, and rendering the pin more easily removable.

From the viewpoint of improving the heat resistance and insulating properties, the thickness of the active layer is preferably 0.5 $\mu$m or greater, while it is preferably no greater than 50 $\mu$m from the viewpoint of increasing the capacity and permeability of the battery.

The density of the active layer is preferably 0.5 g/cm$^3$ to 3.0 g/cm$^3$ and more preferably 0.7 g/cm$^3$ to 2.0 g/cm$^3$. If the layer density of the active layer is at least 0.5 g/cm$^3$ the heat shrinkage factor at high temperature will tend to be satisfactory, and if it is 3.0 g/cm$^3$ or lower the gas permeability will tend to be satisfactory.

The method of forming the active layer may be coating at least one side of the substrate with a coating solution containing inorganic particles and a resin binder. For such a method, the coating solution may include a solvent and a dispersing agent to increase the dispersion stability and coatability.

The method of coating the coating solution onto the substrate is not particularly restricted so long as the necessary layer thickness and coating area can be obtained. For example, the starting material for the particles that contains the resin binder and the starting material for the polymer substrate may be laminated and extruded by a co-extrusion method, or the substrate and the active film may be fabricated separately and then attached together.

[Thermoplastic polymer layer]

If desired, the separator for a power storage device may have a thermoplastic polymer layer in addition to the polyolefin porous substrate and the active layer. The thermoplastic polymer layer may be laminated on one or both sides of the porous substrate, or on the active layer, and preferably it is laminated in such a manner that at least a portion of the active layer is exposed.

According to this embodiment, the area ratio of the thermoplastic polymer layer with respect to the total area of the surface area of the polyolefin porous substrate on which the thermoplastic polymer layer is laminated, is preferably no greater than 100%, 80%, 75% or 70%, and the same area ratio is preferably at least 5%, 10% or 15%. Limiting the coating area of the thermoplastic polymer layer to no greater than 100% is preferred from the viewpoint of further minimizing pore clogging of the substrate by the thermoplastic polymer and further increasing the permeability of the separator. The coating area is also preferably at least 5% from the viewpoint of further increasing adhesion with electrodes. The area ratio is measured by SEM observation of the thermoplastic polymer layer-formed surface of the separator.

When the thermoplastic polymer layer is a layer combined with inorganic particles, the area in which the thermoplastic polymer is present is calculated using the total area of the thermoplastic polymer and the inorganic particles as 100%.

When the thermoplastic polymer layer is arranged on only a portion of the polyolefin porous substrate and inorganic particle layer, the arrangement pattern of the thermoplastic polymer layer may be, for example, dotted, striped, lattice-like, banded, hexagonal, random, or any combination of these.

The thickness of the thermoplastic polymer layer laminated on the polyolefin porous substrate is preferably 0.01 $\mu$m to 5 $\mu$m, more preferably 0.1 $\mu$m to 3 $\mu$m and even more preferably 0.1 to 1 $\mu$m, on each side of the substrate.

(Thermoplastic polymer)

The thermoplastic polymer layer comprises a thermoplastic polymer. The thermoplastic polymer layer includes the thermoplastic polymer at preferably 60 weight% or greater, more preferably 90 weight% or greater, even more preferably 95 weight% or greater and most preferably 98 weight% or greater, with respect to the entire weight. The thermoplastic polymer layer may also include other components in addition to the thermoplastic polymer.

Examples of thermoplastic polymers include the following:

polyolefin resins such as polyethylene, polypropylene and $\alpha$-polyolefin;
fluorine-based polymers such as polyvinylidene fluoride and polytetrafluoroethylene, and copolymers comprising them;
diene-based polymers comprising conjugated dienes such as butadiene and isoprene as monomer units, or copolymers comprising them, or their hydrogenated forms;
acrylic polymers comprising (meth)acrylates as monomer units and having no polyalkylene glycol units, acrylic polymers comprising (meth)acrylates as monomer units and having one or two polyalkylene glycol units, or copolymers comprising them, or their hydrogenated forms;

rubber compounds such as ethylene-propylene rubber, polyvinyl alcohol and polyvinyl acetate;

cellulose derivatives such as ethyl cellulose, methyl cellulose, hydroxyethyl cellulose and carboxymethyl cellulose;

polyalkylene glycols without polymerizable functional groups, such as polyethylene glycol and polypropylene glycol;

resins such as polyphenylene ether, polysulfone, polyethersulfone, polyphenylene sulfide, polyetherimide, polyamideimide, polyamide and polyester;

copolymers having ethylenic unsaturated monomers with 3 or more repeating alkylene glycol units, as copolymer units, which were mentioned above as resin binders for forming the resin porous layer,

and also combinations of the above.

Preferred among these are diene-based polymers, acrylic polymers and fluorine-based polymers, from the viewpoint of adhesion with electrode active materials, softness, and polymer ion permeability.

The glass transition temperature (Tg) of the thermoplastic polymer is preferably -50°C or higher and more preferably in the range of -50°C to 150°C, from the viewpoint of adhesion with electrodes and ion permeability.

From the viewpoint of wettability on the polyolefin multilayer microporous film, bindability between the polyolefin multilayer microporous film and the thermoplastic polymer layer and adhesion with electrodes, the thermoplastic polymer layer is preferably blended with a polymer having a glass transition temperature below 20°C, and from the viewpoint of blocking resistance and ion permeability, it is preferably also blended with a polymer having a glass transition temperature of 20°C or higher.

A thermoplastic polymer with at least two glass transition temperatures can be obtained by a method of blending of two or more thermoplastic polymers or a method using a thermoplastic polymer with a core-shell structure, without any limitation to these methods.

A core-shell structure means that the polymer has a double structure form, made of a composition in which the polymer belonging to the core portion and the polymer belonging to the shell portion are different.

For a polymer blend or core-shell structure, the glass transition temperature of the thermoplastic polymer as a whole can be controlled by combination of a polymer with a high glass transition temperature and a polymer with a low glass transition temperature. Multiple functions can also be imparted to the thermoplastic polymer as a whole.

For this embodiment, a thermoplastic copolymer is preferably one that is particulate when the glass transition temperature is 20°C or higher, 25°C or higher or 30°C or higher, from the viewpoint of blocking resistance and ion permeability of the separator.

By incorporating a particulate thermoplastic copolymer into the thermoplastic polymer layer it is possible to ensure porosity of the thermoplastic polymer layer on the substrate, and blocking resistance of the separator.

The mean particle diameter of the particulate thermoplastic copolymer is preferably 10 nm to 2,000 nm, more preferably 50 nm to 1,500 nm, even more preferably 100 nm to 1,000 nm, yet more preferably 130 nm to 800 nm, especially preferably 150 to 800 nm and most preferably 200 to 750 nm. A mean particle diameter of 10 nm or greater is to ensure dimensions for the particulate thermoplastic polymer so that it will not infiltrate into the pores of the substrate that includes at least the porous film, when the particulate thermoplastic polymer has been coated onto the substrate. This is therefore preferred from the viewpoint of increasing adhesion strength between the electrode and separator, and improving the cycle characteristics of the power storage device. A mean particle diameter of no greater than 2,000 nm is preferred from the viewpoint of coating the substrate with the particulate thermoplastic polymer in an amount necessary to obtain both satisfactory adhesion strength between the electrode and separator and excellent cycle characteristics for the power storage device. The mean particle diameter of the particulate thermoplastic polymer can be measured by the method described in the Examples.

The particulate thermoplastic polymer described above can be produced by a known polymerization method using the corresponding monomers or comonomers. The polymerization method used may be any appropriate method such as solution polymerization, emulsion polymerization or bulk polymerization.

Since the thermoplastic polymer layer can be easily formed by coating for this embodiment, preferably the particulate thermoplastic polymer is formed by emulsion polymerization and the thermoplastic polymer emulsion obtained by the polymerization is used as an aqueous latex.

(Optional components)

The thermoplastic polymer layer of this embodiment may comprise the thermoplastic polymer alone, or it may also comprise other optional components in addition to the thermoplastic polymer. Examples of optional components include the inorganic particles described above for formation of the active layer.

<Method for producing separator for power storage device>

[Method for producing polyolefin multilayer microporous film (polyolefin porous substrate)]

(Method for producing first and second microporous layers)

As explained above, the polyolefin multilayer microporous film of this embodiment is laminated in the order: first microporous layer, second microporous layer, first microporous layer, and the method for producing the first and second microporous layers may be any publicly known production method, without any particular restrictions. Examples include a method of melt-kneading a polyolefin resin composition and a plasticizer and molding the mixture into a sheet, optionally with drawing, and then extracting the plasticizer to form pores; a method of melt-kneading a polyolefin resin composition, extruding it at a high draw ratio, and then drawing it with heat treatment to detach the polyolefin crystal interface and form pores; a method of melt-kneading a polyolefin resin composition and an inorganic filler and molding the mixture onto a sheet, and then detaching the interface between the polyolefin and the inorganic filler by drawing to form pores; and a method of first dissolving the polyolefin resin composition, and then dipping it in a poor solvent for the polyolefin to solidify the polyolefin while simultaneously removing the solvent, to form pores.

The method of fabricating a nonwoven fabric or paper sheet as the substrate for the first and second microporous layers may also be a publicly known method. The fabrication method may be, for example, a chemical bond method in which a web is immersed in a binder and dried to produce bonding between the fibers; a thermal bond method in which heat-fusible fibers are mixed into a web and the fibers are partially melted to produce bonding between the fibers; a needle punching method in which a web is repeatedly pierced with a puncturing needle to mechanically tangle the fibers; or a hydroentangling method in which a high-pressure water stream is sprayed from a nozzle onto a web through a net (screen), producing tangling between the fibers.

An example of a method of producing the polyolefin multilayer microporous film (polyolefin porous substrate) will now be described, as a method of melt-kneading a polyolefin resin composition and a plasticizer and forming first and second microporous layer sheets, and then extracting the plasticizer to laminate first and second microporous layers.

First, the polyolefin resin composition and the plasticizer are melt-kneaded. In the melt kneading method, a polyolefin resin and other additives as necessary may be loaded into a resin kneader such as an extruder, kneader, Laboplastomil, kneading roll or Banbury mixer, and the plasticizer introduced at a desired proportion and kneaded in while hot melting the resin components. Before loading the polyolefin resin, the other additives and the plasticizer into the resin kneader, they are preferably pre-kneaded in a prescribed proportion using a Henschel mixer or the like. More preferably, only a portion of the plasticizer is loaded in during the pre-kneading, while the remainder of the plasticizer is kneaded in while side feeding it to the resin kneader.

The plasticizer used may be a non-volatile solvent that can form a homogeneous solution at or above the melting point of the polyolefin. Specific examples of such non-volatile solvents include hydrocarbons such as liquid paraffin and paraffin wax; esters such as dioctyl phthalate and dibutyl phthalate; and higher alcohols such as oleyl alcohol and stearyl alcohol, with liquid paraffin being preferable among these.

The proportion of the polyolefin resin composition and the plasticizer is not particularly restricted so long as it is in a range in which they can undergo uniform melt kneading to be molded into a sheet form. For example, the weight fraction of the plasticizer in the composition comprising the polyolefin resin composition and the plasticizer is preferably 30 to 80 weight% and more preferably 40 to 70 weight%. The weight fraction of the plasticizer is preferably within this range from the viewpoint of both melt tension during melt molding, and formation of a homogeneous and fine pore structure.

The melt-kneaded mixture is then formed into a sheet. The method of producing the molded sheet may be, for example, a method of extruding the melt-kneaded mixture through a T-die or the like into a sheet, and contacting it with a heat conductor to cool it to a sufficiently lower temperature than the crystallization temperature of the resin component, thereby solidifying it. The heat conductor used for the cooling solidification may be metal, water, air or the plasticizer itself, but a metal roll is preferred because it has high heat conduction efficiency. When the melt-kneaded mixture is to be contacted with metal rolls, it is more preferably sandwiched between the rolls because this will further increase the heat conduction efficiency while causing the sheet to become oriented and increasing the film strength, while the surface smoothness of the sheet will also be improved. The die lip gap when extruding into a sheet from a T-die is preferably from 400 $\mu$m to 3,000 $\mu$m and more preferably from 500 $\mu$m to 2,500 $\mu$m.

(Method for producing polyolefin multilayer microporous film)

The polyolefin multilayer microporous film (polyolefin porous substrate) of this embodiment is laminated in the order: first microporous layer, second microporous layer, first microporous layer, and the method for the lamination may be the following bulk three-layer laminating method, as an example. The polyolefin resin compositions and the plasticizers as constituent components for the first and second microporous layers as mentioned above are melt-kneaded using separate twin-screw extruders to form olefin solutions, after which the polyolefin solutions are supplied from their respective twin-screw extruders to a three-layer forming T-die, and the layer thickness ratio for the layers formed from the solutions (first polyolefin solution layer/second polyolefin solution layer/first polyolefin solution layer) is adjusted to the desired range while taking the laminate up at a prescribed take-up speed and cooling it, to form a gel-like three-layer sheet.

Although a three-layer forming T-die is used above to simultaneously form a three-layer laminate, each layer may instead be formed separately and then combined into three layers.

The molded sheet obtained in this manner is then preferably drawn. Both uniaxial drawing and biaxial drawing are suitable for the drawing treatment. Biaxial drawing is preferred from the viewpoint of the strength of the obtained polyolefin porous substrate. When a molded sheet is subjected to high-ratio drawing in the biaxial directions, the molecules become oriented in the in-plane direction, such that the porous substrate that is obtained as the final result is less likely to tear, and has high breakage strength. Examples of drawing methods include simultaneous biaxial drawing, sequential biaxial drawing, multistage drawing and repeated drawing. Simultaneous biaxial drawing is preferred from the viewpoint of increasing the breakage strength and obtaining greater uniformity during drawing and superior shutdown properties.

The draw ratio is an area increase by a factor of preferably in the range of 20 to 100, and more preferably in the range of 25 to 50. The draw ratio in each axial direction is preferably in the range of between 4 and 10, inclusive, in the MD direction and between 4 and 10, inclusive, in the TD direction, and more preferably in the range of between 5 and 8, inclusive, in the MD direction and between 5 and 8, inclusive, in the TD direction. The increase in total area is preferably within this range, because it will be possible to impart sufficient strength while preventing film breakage in the drawing step and obtaining high productivity.

The molded sheet obtained as described above may also be subjected to press rolling. Press rolling may be carried out, for example, by a press method using a double belt press machine or the like. Press rolling can increase the orientation of the surface layer sections, in particular. The area increase by press rolling is preferably by a factor of greater than 1 and no greater than 3, and more preferably a factor of greater than 1 and no greater than 2. The area increase by press rolling is preferably within this range from the viewpoint of increasing the film strength of the polyolefin porous substrate that is obtained at the final stage, and allowing formation of a porous structure that is uniform in the thickness direction of the film.

The plasticizer is then removed from the molded sheet to obtain a porous substrate. The method of removing the plasticizer may be, for example, a method of immersing the molded sheet in an extraction solvent to extract the plasticizer, and then thoroughly drying it. The method of extracting the plasticizer may be either a batch process or a continuous process. In order to minimize shrinkage of the polyolefin porous substrate, it is preferred to constrain the edges of the molded sheet during the series of steps of immersion and drying. The plasticizer residue in the porous substrate is preferably less than 1 weight%.

The extraction solvent used is preferably one that is a poor solvent for the polyolefin resin and a good solvent for the plasticizer, and that has a boiling point that is lower than the melting point of the polyolefin resin. Examples of such extraction solvents include hydrocarbons such as n-hexane and cyclohexane; halogenated hydrocarbons such as methylene chloride and 1,1,1-trichloroethane; non-chlorine-based halogenated solvents such as hydrofluoroethers and hydrofluorocarbons; alcohols such as ethanol and isopropanol; ethers such as diethyl ether and tetrahydrofuran; and ketones such as acetone and methyl ethyl ketone. These extraction solvents may be collected by a process such as distillation and then reutilized.

In order to minimize shrinkage of the polyolefin porous substrate, heat treatment such as heat setting or thermal relaxation may be carried out, either after the drawing step or after formation of the porous substrate. The porous substrate may also be subjected to posttreatment such as hydrophilicizing treatment with a surfactant, or crosslinking treatment with ionizing radiation.

Surface treatment is preferably carried out on the surface of the polyolefin porous substrate because this will facilitate subsequent coating of the coating solution, while improving adhesion between the polyolefin and the active layer or thermoplastic polymer layer. The method of surface treatment may be, for example, corona discharge treatment, plasma treatment, mechanical roughening, solvent treatment, acid treatment or ultraviolet oxidation.

[Method of forming active layer]

The active layer can be formed on the substrate by, for example, coating at least one side of the substrate with a coating solution comprising the inorganic particles, the fluorine-based resin and, optionally, additional components such as a solvent (for example, water) and a dispersing agent. An emulsion obtained by synthesis of the fluorine-based resin by emulsion polymerization may also be used directly as the coating solution.

The method of forming the active layer may be, for example, coating at least one side of the polyolefin porous substrate with a coating solution containing the inorganic particles and the fluorine-based resin. For such a method, the coating solution may include a solvent and a dispersing agent to increase the dispersion stability and coatability.

The method of coating the coating solution onto the substrate is not particularly restricted so long as the necessary layer thickness and coating area can be obtained. For example, the starting material for the active layer including a polyolefin resin and the starting material for the polyolefin multilayer microporous substrate may be laminated and extruded by co-extrusion, or the porous substrate and the active film may be fabricated separately and then attached together.

The method of coating the coating solution onto the substrate is not particularly restricted so long as the necessary layer thickness and coating area can be obtained. Examples for the coating method include gravure coater methods, small-diameter gravure coater methods, reverse roll coater methods, transfer roll coater methods, kiss coater methods, dip coater methods, knife coater methods, air doctor coater methods, blade coater methods, rod coater methods, squeeze coater methods, cast coater methods, die coater methods, screen printing methods, spray coating methods and ink-jet coating methods. Preferred among these are gravure coater methods, because they allow a high degree of freedom for the coating shape.

Alternatively, the starting material for inorganic particles that contain the fluorine-based resin (binder) and the starting material for the polymer substrate may be laminated and extruded by a co-extrusion method, or the substrate and the active layer may be fabricated separately and then attached together.

The method of removing the solvent from the coated film after coating is not particularly restricted so long as it does not adversely affect the substrate or the porous layer. For example, it may be a method of drying at a temperature below the melting point of the substrate while the substrate is anchored, or a method of reduced pressure drying at low temperature.

[Method of forming thermoplastic polymer layer]

The thermoplastic polymer may be formed on the substrate by, for example, coating the substrate with a coating solution comprising the thermoplastic polymer. An emulsion obtained by synthesis of the thermoplastic polymer by emulsion polymerization may also be used directly as the coating solution. The coating solution preferably comprises a poor solvent, such as water or a mixed solvent of water and a water-soluble organic medium (for example, methanol or ethanol).

The method of coating the coating solution containing the thermoplastic polymer onto the polyolefin porous substrate is not particularly restricted so long as it can result in the desired coating pattern, coated film thickness and coating area. For example, the coating method described above for coating of the inorganic particle-containing coating solution may be used. A gravure coater method or spray coating method is preferred from the viewpoint of a high degree of freedom for the coating shape of the thermoplastic polymer, and in order to easily obtain the preferred area ratio.

The method of removing the solvent from the coated film is not particularly restricted so long as it is a method that does not adversely affect the polyolefin porous substrate or the polymer layer. For example, it may be a method of drying the polyolefin porous substrate at a temperature below its melting point while anchoring it, a method of reduced pressure drying at low temperature, or a method of immersing it in a poor solvent for the thermoplastic polymer to solidify the thermoplastic polymer as particles, while simultaneously extracting out the solvent.

<Physical properties of separator for power storage device>

The gas permeability of the separator for a power storage device for this embodiment is preferably between 10 seconds/100 cm$^3$ and 650 seconds/100 cm$^3$, inclusive, more preferably between 20 seconds/100 cm$^3$ and 500 seconds/100 cm$^3$, inclusive, even more preferably between 30 seconds/100 cm$^3$ and 450 seconds/100 cm$^3$, inclusive, and most preferably between 50 seconds/100 cm$^3$ and 400 seconds/100 cm$^3$, inclusive. The gas permeability is the air permeability resistance measured according to JIS P-8117, similar to the gas permeability of the polyolefin porous substrate.

If the gas permeability of the separator is at least 10 seconds/100 cm$^3$, self-discharge during use as a battery separator will tend to be reduced, and if it is 650 seconds/100 cm$^3$ or shorter, a satisfactory charge-discharge characteristic will tend to be obtained.

The separator for a power storage device of this embodiment that exhibits such extremely high gas permeability exhibits high ion permeability when it is utilized in a lithium-ion secondary battery.

The final thickness of the separator is preferably between 2 $\mu$m and 200 $\mu$m, inclusive, more preferably between 5 $\mu$m and 100 $\mu$m, inclusive and even more preferably between 7 $\mu$m and 30 $\mu$m, inclusive. If the thickness is at least 2 $\mu$m the mechanical strength will tend to be adequate, and if it is no greater than 200 $\mu$m, the volume occupied by the separator will be reduced, which tends to be advantageous for the purpose of increasing the capacity of the battery.

<Power storage device>

The separator for a power storage device of this embodiment may be combined with a positive electrode, a negative electrode and a non-aqueous electrolyte solution for suitable application as a separator for a power storage device. The power storage device may be a lithium-ion secondary battery, for example.

For manufacture of a lithium-ion secondary battery with the separator of this embodiment, there are no restrictions for the positive electrode, negative electrode, and non-aqueous electrolyte solution, and any publicly known ones may be used.

The positive electrode used may be a negative electrode having a positive electrode active material layer comprising a positive electrode active material formed on a positive electrode collector. The positive electrode collector may be aluminum foil, for example, and the positive electrode active material may be a lithium-containing complex oxide such as $LiCoO_2$, $LiNiO_2$, spinel $LiMnO_4$ or olivine-type $LiFePO_4$, for example. The positive electrode active material layer may include a binder and a conductive material in addition to the positive electrode active material.

The negative electrode used may be a positive electrode having a negative electrode active material layer comprising a negative electrode active material formed on a negative electrode collector. The negative electrode collector may be copper foil, for example, and the negative electrode active material may be a carbon material such as graphite, a non-graphitizable carbon material, an easily graphitizable carbon material or complex carbon; or silicon, tin, metal lithium or any of various alloy materials, for example.

There are no particular restrictions on the non-aqueous electrolyte solution, and an electrolyte solution comprising an electrolyte dissolved in an organic solvent may be used. Examples of organic solvents include propylene carbonate, ethylene carbonate, dimethyl carbonate, diethyl carbonate and ethylmethyl carbonate. Examples of electrolytes include lithium salts such as $LiClO_4$, $LiBF_4$ and $LiPF_6$.

There are no particular restrictions on the method of producing a power storage device using the separator for a power storage device of this embodiment. The following methods may be mentioned as examples.

The separator of this embodiment can be produced by first fabricating longitudinally shaped separators each with a width of 10 to 500 mm (preferably 80 to 500 mm) and a length of 200 to 4,000 m (preferably 1,000 to 4,000 m), laminating the separators in the order: positive electrode-separator-negative electrode-separator, or negative electrode-separator-positive electrode-separator, winding the laminate into a circular or flat spiral form to obtain a roll, and inserting the roll into a battery can and further injecting an electrolyte solution into it. Alternatively, it can be produced by a method in which a laminated body composed of separator sheets and electrodes, or a roll obtained by folding the electrodes and separators, is placed in a battery container (for example, an aluminum film), which is then filled with an electrolyte solution.

The laminated body or roll is preferably pressed during the procedure. Specifically, the separator for a power storage device of this embodiment may be overlaid and pressed with an electrode having a collector and an active material layer formed on at least one side of the collector, so that the thermoplastic polymer layer and the active material layer are facing each other. The pressing temperature may be between 25°C and 120°C, or 50°C to 100°C. The pressing may be carried out using a publicly known press apparatus such as a roll press or surface press, as appropriate.

The lithium-ion secondary battery produced in this manner has a coating layer with excellent heat resistance and strength, and is provided with a separator that has reduced ion resistance, and therefore it exhibits excellent safety and battery characteristics (especially rate properties). Moreover, when the thermoplastic polymer is provided on the outermost surface of the separator it exhibits excellent adhesion with electrodes, which minimizes peeling between the electrodes and separator that can occur during charge-discharge and allows homogeneous charge-discharge to be achieved, so that the resistance to continuous prolonged operation is excellent.

Evaluation of the physical properties in the experimental examples was carried out by the following methods.

<Evaluation>

<Measuring methods and evaluation methods>

(1) Active layer/polyolefin porous substrate peel strength

A piece of 12 mm width × 100 mm length tape (Scotch 600, product name of 3M) was attached to the active layer of the separator obtained in each of the examples and comparative examples (except for Comparative Example 1), parallel to the lengthwise direction of the separator. The force required to peel the tape from the sample at a speed of 50 mm/min was measured using a 90° peel strength meter (product name: IP-5N by Imada). The average value of the peel strength obtained by measurement at 5 points was taken as the peel strength between the active layer and substrate, and was evaluated using the following evaluation criteria.

A: Peel strength of ≥60 N/m
B: Peel strength of ≥40 N/m and <60 N/m
C: Peel strength of <40 N/m

(2) Battery windability (pin removability)

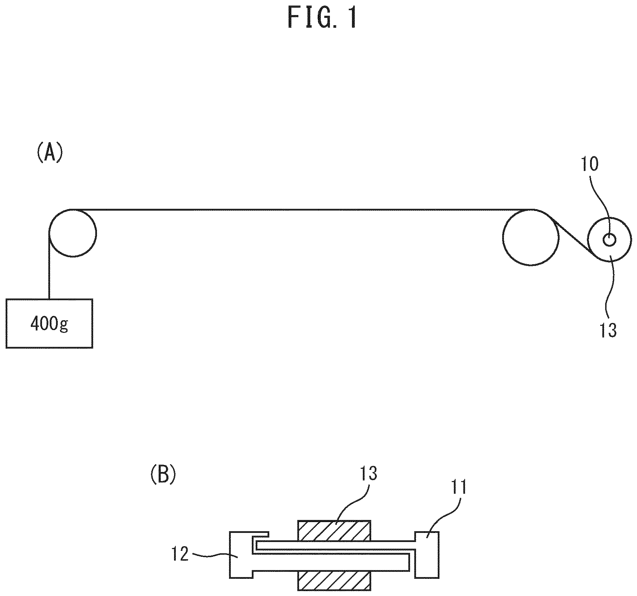

Using a manual winding machine by Kaido Mfg. Co., Ltd., in the manner shown in Fig. 1(A) illustrating the overall construction of the apparatus, two wound up samples (13) each having a length of 3 m and a width of 60 mm were wound on a pin (10) with the active layers contacting the pin under a load of 400 g, and then in the wound up section shown in Fig. 1(B), pin I (11) was removed, the wound up sample (13) was manually pulled and removed from pin II (12), and the pin removability was evaluated according to the following criteria based on the appearance of the sample after removal.

A: No more than 4 of 100 samples showed shifting of 2 mm or greater of the pin contact section due to pulling of the pin, compared to before removal of the pin.
B: 5 to 9 of 100 samples showed shifting of 2 mm or greater of the pin contact section due to pulling of the pin, compared to before removal of the pin.
C: 10 or more of 100 samples showed shifting of 2 mm or greater of the pin contact section due to pulling of the pin, compared to before removal of the pin.

(3) Thermal shock properties

The separators obtained in the examples and comparative examples were used for evaluation of the thermal shock properties (thermal resistant cycle characteristics) of secondary batteries assembled according to a. to d. below.

a. Fabrication of positive electrode

After dry blending 96 parts by weight of lithium cobaltate ($LiCoO_2$) as a positive electrode active material, 2 parts by weight of carbon black powder as a positive electrode conductive agent and 2 parts by weight of polyvinylidene fluoride as a positive electrode binder (binder), the blend was dispersed in N-methylpyrrolidone (NMP) to prepare a positive electrode mixture slurry. The positive electrode mixture slurry was coated onto both sides of a 13 $\mu$m-thick aluminum foil as the positive electrode collector, and after drying, it was press rolled to fabricate a positive electrode. The packing density and thickness of the positive electrode active material layer were 3.95 g/cm$^3$ and 140 $\mu$m, respectively, at the sections where the positive electrode active material layer had been formed on both sides of the collector.

b. Fabrication of negative electrode

A mixture was prepared comprising 97 parts by weight of a carbon-based active material (artificial graphite) and 3 parts by weight of a silicon-based active material ($SiO_x$)(x = 1.05).
After then combining 98 parts by weight of this mixture with 2 parts by weight of carboxymethyl cellulose sodium (CMC-Na), the resulting mixture was dispersed in water to obtain a negative electrode mixture slurry.
The negative electrode mixture slurry was coated onto both sides of an 8 $\mu$m-thick copper foil as a negative electrode collector, and then dried and press rolled. A negative electrode was fabricated by the steps described above. The packing density and thickness of the negative electrode active material layer were 1.75 g/cm$^3$ and 137 $\mu$m, respectively, at the sections where the negative electrode active material layer had been formed on both sides of the collector.

c. Preparation of non-aqueous electrolyte solution

A non-aqueous electrolyte solution was prepared by dissolving 1.2 mol/L concentrated $LiPF_6$, as a solute, in a mixed solvent of ethylene carbonate:diethyl carbonate = 3:7 (weight ratio).

d. Battery assembly

After cutting the positive electrode prepared in a., the negative electrode prepared in b. and the separators prepared in the examples and comparative examples, and laminating them, they were wound in the machine direction at room temperature and pressed, to fabricate flat wound battery elements. Each battery element was inserted into a 120 $\mu$m-thick laminate film comprising a triple layer of polypropylene/aluminum/nylon, from the inside toward the outside, and the electrode terminals were heat-fused while protruding from the casing. The non-aqueous electrolyte solution was injected into the casing housing the battery element, and the remaining side of the casing was heat-fused and sealed under reduced pressure. This was heated at 80°C for 3 minutes between metal sheets to obtain a 2 mm-thick $\times$ 30 mm-wide $\times$ 30 mm-high battery.
Next, secondary batteries using the separators of the examples and comparative examples were charged to 4.35 V at a constant current of 56 mA at 25°C, and then charged at constant voltage to a charging current of 14 mA.

The resistance of each secondary battery in the discharged state after constant voltage charge (1 kHz alternating current impedance: $\Omega$) was measured, and the resistance was recorded as the initial resistance.

Using a thermal shock tester (TSA-71H-W by Espec Corp.), the temperature was then raised to 70°C and held for 4 hours. The battery was then held at 20°C for 2 hours and subsequently held at -40°C for 4 hours, as a cycle that was repeated 50 times. The resistance of the secondary battery (1 kHz alternating current impedance: $\Omega$) was measured by the same method as d. above. From these results and the measured initial resistance, the amount of resistance variation before and after thermal cycling (resistance after thermal cycling - initial resistance) was calculated and evaluated according to the following criteria.

A: Resistance variation before and after thermal shock: $\geq 0\ \Omega$ and $<10\ \Omega$
B: Resistance variation before and after thermal shock: $\geq 10\ \Omega$ and $<20\ \Omega$
C: Resistance variation before and after thermal shock: $\geq 20\ \Omega$

(4) Low-temperature cycle characteristics

The separators obtained in the examples and comparative examples were used for evaluation of the low-temperature cycle characteristics of secondary batteries assembled according to a. to c. below.

a. Fabrication of positive plate

In a dual-arm kneading machine there were stirred and kneaded 100 parts by weight of lithium cobaltate as an active material, 2 parts by weight of acetylene black as a conductive agent with respect to 100 parts by weight of the active material and 2 parts by weight of polyvinylidene fluoride as a binder with respect to 100 parts by weight of the active material, together with a suitable amount of N-methyl-2-pyrrolidone, fabricating a positive electrode mixture coating material, after which the positive electrode mixture slurry was coated and dried onto both sides of a 20 $\mu$m-thick Al foil, to prepare a positive electrode active material layer. The laminated body comprising the positive electrode active material layer on both sides of the positive electrode collector was pressed and rolled with a pair of rollers to obtain a positive plate with a total thickness of 120 $\mu$m. On one side of the positive electrode collector in the short direction, an exposed portion of the positive electrode collector was provided without the positive electrode active material layer.

b. Fabrication of negative plate

In a dual-arm kneading machine there were stirred 100 parts by volume of artificial graphite as a negative electrode active material, 2.3 parts by volume of a styrene-butadiene copolymer rubber particle dispersion as a binder, in terms of the solid binder, with respect to 100 parts by volume of the active material, 1.4 parts by volume of carboxymethyl cellulose as a thickener, with respect to 100 parts by volume of the active material, and a prescribed amount of water, to prepare a negative electrode coating material mixture with a volume solid content of 55%. The volume solid content is the volume concentration of solids in the coating material mixture. The negative electrode coating material mixture was coated and dried onto both sides of a 15 $\mu$m-thick copper foil, and then press rolled to obtain a negative plate with a total thickness of 185 $\mu$m. On one side of the negative electrode collector in the short direction, an exposed portion of the negative electrode collector was provided without the negative electrode active material layer.

c. Fabrication of battery

The positive plates, the separators of the examples and comparative examples and the negative plates were wound and each roll was inserted into a cylindrical battery case, 5.5 g of an electrolyte solution comprising 1 M LiPF$_6$ and 3 parts by weight of VC dissolved in a mixed solvent of EC (ethylene carbonate)/DMC (dimethyl carbonate)/MEC (methylethyl carbonate) was added, and the case was sealed to fabricate a cylindrical 18650 non-aqueous secondary battery with a design capacity of 2000 mAh.

d. Measurement of low-temperature cycle characteristic

The capacity retention at 100 cycles of low temperature was measured by the following method. Run-in charge-discharge of the sealed battery was carried out twice, and after storing it for 7 days in an environment at 45°C, the following charge-discharge cycle was repeated 100 times at -30°C. Charging was carried out at 1400 mA, where a constant voltage of 4.2 V was applied, the charge being completed when the charging current fell to 100 mA, while discharging down to a final voltage of 3 V was carried out at a constant current of 2000 mA, and with this as 1 cycle, the service capacity ratio at the 100th cycle with respect to the 1st cycle was measured as the 100-cycle capacity retention. The low-temperature cycle characteristic was evaluated according to the following criteria.

A: Capacity retention of ≥80% at 100 low temperature cycles
B: Capacity retention of ≥70% and <80% at 100 low temperature cycles
C: Capacity retention of <70% at 100 low temperature cycles

(5) Variation in active layer/polyolefin porous substrate peel strength

In a similar manner as "(1) Peel strength between active layer and polyolefin porous substrate" above, 12 mm width × 100 mm length tape (Scotch 600, product name of 3M) was attached to each of the 600 mm-wide separators of the examples and comparative examples across 100 mm spacings, in a manner oriented parallel to the lengthwise direction of the separator (5 points in the TD direction). Similarly, tape was attached at 5 points across 500 mm spacings in the lengthwise direction of the separator (5 points in the MD direction). The force required to peel the attached tape from the sample at the 25 points at a speed of 50 mm/min was measured using a 90° peel strength meter (product name: IP-5N by Imada). The peel strength variation [%] was calculated from the standard deviation and mean value of the peel strengths, based on the following formula, and evaluated by the following criteria.

[Mathematical Formula 1]

$$\text{Standard deviation of peel strength } \sigma = \sqrt{\frac{n\sum x^2 - \left(\sum x\right)^2}{n^2}}$$

$$\text{Peel strength variation} = \sigma/x \times 100 \ (\%)$$

Here, x represents the mean peel strength, and n represents the number of measurements.

(Evaluation criteria)

A: Variation of <10% in active layer/substrate peel strength
B: Variation of ≥10% and <20% in active layer/substrate peel strength
C: Variation of ≥20% in active layer/substrate peel strength

(6) Impact resistance (impact test)

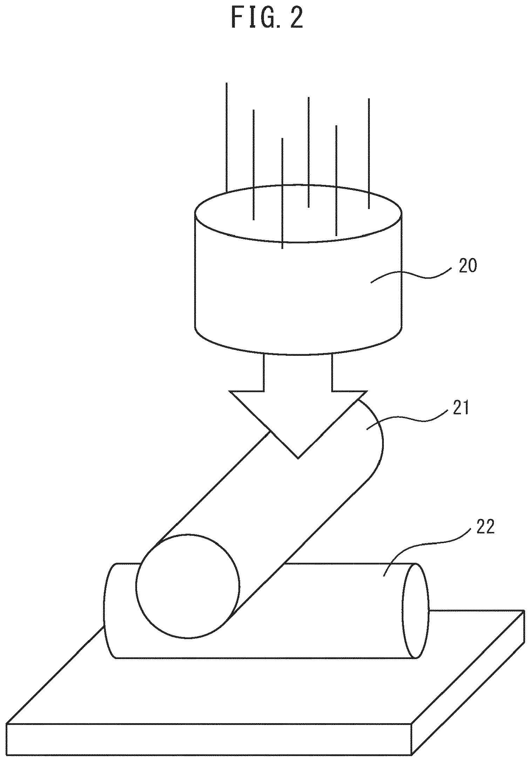

Fig. 2 is a schematic diagram illustrating an impact test according to UL Standard 1642 and/or 2054. In the manner described by UL standard 1642 and/or 2054, a round bar (21) ($\phi$ = 15.8 mm) was set on a sample (22) arranged on a test stand, so that the sample (22) and the round bar (21) were generally perpendicular, and a 9.1 kg (approximately 20 lb) deadweight (20) was dropped onto the top surface of the round bar (21) from a position at a height of 610 ±25 mm from the round bar (21), to observe the effect of impact on the sample.

The procedure for the impact test in the examples and comparative examples will now be explained, with reference to Fig. 2 and UL standards 1642 and 2054.

a. Fabrication of positive electrode

After mixing 90.4 weight% of a nickel, manganese and cobalt complex oxide (NMC) (Ni:Mn:Co = 1:1:1 (element ratio), density: 4.70 g/cm$^3$, capacity density: 175 mAh/g), as the positive electrode active material, 1.6 weight% of graphite powder (KS6) (density: 2.26 g/cm$^3$, number-mean particle size: 6.5 $\mu$m) and 3.8 weight% of acetylene black powder (AB) (density: 1.95 g/cm$^3$, number-mean particle size: 48 nm), as conductive aids, and 4.2 weight% of polyvinylidene fluoride (PVDF) (density: 1.75 g/cm$^3$) as a binder, the mixture was dispersed in N-methylpyrrolidone (NMP) to prepare a slurry. The slurry was coated using a die coater onto one side of a 20 $\mu$m-thick aluminum foil sheet as the positive electrode collector, and dried at 130°C for 3 minutes, after which it was press rolled using a roll press. After press rolling it was slit to a 57.0 mm width to obtain a positive electrode. The coating amount of the positive electrode active material was 109 g/m$^2$.

b. Fabrication of negative electrode

In purified water there were dispersed 87.6 weight% of graphite powder A (density: 2.23 g/cm$^3$, number-mean particle size: 12.7 $\mu$m) and 9.7 weight% of graphite powder B (density: 2.27 g/cm$^3$, number-mean particle size: 6.5 $\mu$m) as negative electrode active materials, and 1.4 (solid) weight% of carboxymethyl cellulose ammonium salt (1.83 weight% solid concentration aqueous solution) and 1.7 (solid) weight% of diene rubber latex (40 weight% solid concentration aqueous solution) as binders, to prepare a slurry. The slurry was coated using a die coater onto one side of a 12 $\mu$m-thick copper foil sheet as the negative electrode collector, and dried at 120°C for 3 minutes, after which it was press rolled using a roll press. After press rolling it was slit to a 58.5 mm width to obtain a negative electrode. The coating amount of the negative electrode active material was 5.2 g/m$^2$.

c. Preparation of non-aqueous electrolyte solution

LiPF$_6$ was dissolved to 1 mol/L in a mixed solvent comprising ethylene carbonate (EC) and ethylmethyl carbonate (EMC) in a volume ratio of 1:2 (Lithium Battery Grade, product of Kishida Chemical Co., Ltd.), to obtain an electrolyte solution as a non-aqueous electrolyte.

d. Battery assembly

A roll, obtained by stacking the fabricated positive electrode and negative electrode on both sides of a separator of the examples and winding the stack in a tubular fashion, was inserted into a stainless steel cylindrical battery casing. Next, 5 mL of the aforementioned electrolyte solution was injected into the roll, which was then immersed in the electrolyte solution, and the battery casing was sealed shut to fabricate a non-aqueous electrolyte secondary battery.

e. Heat treatment

The non-aqueous electrolyte secondary battery obtained in d. was stored for 48 hours in an environment at 60°C.

f. Initial charge-discharge

The non-aqueous electrolyte secondary battery obtained in e. was charged at a constant current of 0.3C in an environment of 25°C until reaching 4.2 V, after which it was charged at a constant voltage of 4.2 V, and discharged to 3.0 V at a constant current of 0.3C. The total time for charging at constant current and charging at constant voltage was 8 hours. The value of 1C is the current discharged by the battery in 1 hour.

The battery was then charged at a constant current of 1C, and upon reaching 4.2 V, it was charged at a constant voltage of 4.2 V and discharged to 3.0 V at a constant current of 1C. The total time for charging at constant current and charging at constant voltage was 3 hours. The capacity during discharge at a constant current of 1C was recorded as the 1C service capacity (mAh). The non-aqueous electrolyte secondary battery (22) obtained in e. was charged at a constant current of 1C in an environment of 25°C until reaching 4.2 V, after which it was charged at a constant voltage of 4.2 V for 3 hours.

Next, in an environment of 25°C, the battery was placed sideways on a flat surface, and a stainless steel round bar (21) with a diameter of 15.8 mm was placed at the center of the battery (22), crossing the battery. A 9.1 kg deadweight (20) was dropped from a height of 61 $\pm$2.5 cm so that an impact perpendicular to the long axial direction of the battery (22) was produced from the round bar (21) set at the center of the battery. Next, the exterior temperature of the battery was measured, and the presence of any effusion of gas from the battery or ignition of the battery was observed. The exterior temperature of the battery is the temperature measured with a thermocouple (K-seal type) at a position 1 cm from the bottom side of the casing of the battery.

The impact test was evaluated according to the following criteria.

A: Battery exterior temperature of <60°C
B: Battery exterior temperature of ≥60°C and <80°C
C: Battery exterior temperature of ≥80°C, no gas effusion or ignition
D: Gas effusion or ignition

(7) Weight-average molecular weight

The weight-average molecular weight of the polyolefin for this embodiment was determined by the following method, based on gel permeation chromatography (GPC). The apparatus used was an ALC/GPC-150-C-plus-type™ by Waters Co., and measurement was performed at 140°C using two 30 cm GMH6-HT™ columns and two 30 cm GMH6-HTL™ columns by Tosoh Corp. in serial connection, with orthodichlorobenzene as the mobile phase solvent, and a sample concentration of 0.05 wt%. A calibration curve was drawn using commercially available monodisperse polystyrene of known molecular weight as the standard substance, and the calculated molecular weight distribution data for each sample in terms of polystyrene was multiplied by 0.43 (polyethylene Q factor/polystyrene Q factor = 17.7/41.3) to obtain the weight-average molecular weight of the polyolefin.

The weight-average molecular weight of the fluorine-containing vinyl compound was determined by the following method, based on GPC. The apparatus used was an Alliance Model GPC2000™ by Waters Co., and measurement was performed C using two GMH6-HT™ columns by Tosoh Corp. and two GMH6-HTL™ columns by Tosoh Corp. in serial connection, with orthodichlorobenzene as the mobile phase solvent, with a column temperature of 140°C. Monodisperse polystyrene of known molecular weight (product of Tosoh Corp.) was used as the standard substance for molecular weight calibration. The weight-average molecular weight of the fluorine-containing vinyl compound was calculated as described above.

[Examples]

(Example 1)

(1) Preparation of first polyolefin solution

With 100 parts by weight of a first polyolefin resin comprising 20 weight% of polypropylene with a Mw (weight-average molecular weight) of $1.2 \times 10^6$ (PP: melting point = 162°C) and 80 weight% of high-density polyethylene with a Mw of $0.74 \times 10^6$ (HDPE: density = 0.955 g/cm$^3$, melting point = 135°C), there was mixed 0.2 part by weight of the antioxidant tetrakis[methylene-3-(3,5-ditertiary butyl-4-hydroxyphenyl)-propionate]methane, to prepare a mixture.

After loading 25 parts by weight of the obtained mixture into a strong kneading type twin-screw extruder (inner diameter = 58 mm, L/D = 42), 75 parts by weight of liquid paraffin [35cst (40°C)] was fed from the side feeder of the twin-screw extruder and melt kneading was carried out at 210°C, 250 rpm, to prepare a first polyolefin solution.

(2) Preparation of second polyolefin solution

With 100 parts by weight of a second polyolefin resin comprising 40 weight% of ultrahigh molecular weight polyethylene with a Mw of $2.0 \times 10^6$ (UHMwPE) and 60 weight% of high-density polyethylene with a Mw of $5.6 \times 10^5$ (HDPE: density = 0.955 g/cm$^3$), there was mixed 0.2 part by weight of the antioxidant tetrakis[methylene-3-(3,5-ditertiary butyl-4-hydroxyphenyl)-propionate]methane, to prepare a mixture.

After loading 25 parts by weight of the obtained mixture into another twin-screw extruder of the same type as before, 75 parts by weight of liquid paraffin [35cSt (40°C)] was fed from the side feeder of the twin-screw extruder and melt-kneading was carried under the same conditions as before to prepare a second polyolefin solution.

(3) Extrusion

The first and second polyolefin solutions were fed from their respective twin-screw extruders to a three-layer T-die, and were extruded to form: first polyolefin solution/second polyolefin solution/first polyolefin solution, in a layer thickness ratio of 10/80/10. The extrusion molded body was cooled with a cooling roll adjusted to 30°C, while being taken up at a take-up speed of 2 m/min, to form a gel-like three-layer sheet.

(4) First drawing, film-forming solvent removal, and drying

The gel-like three-layer sheet was subjected to simultaneous biaxial drawing with a tenter stretcher at 116°C, to a factor of 5 in the MD direction and the TD direction (first drawing). The drawn gel-like three-layer sheet was fixed to a 20 cm × 20 cm aluminum frame plate and immersed in a methylene chloride bath that had been adjusted to 25°C, the liquid paraffin was removed while shaking for 3 minutes at 100 rpm, and air drying was carried out at room temperature.

(5) Second drawing and heat setting

The dried film was drawn to a factor of 1.4 in the TD direction at 126°C, using a batch drawing machine (second drawing). The film was then subjected to heat setting treatment at 126°C by a tenter method.

(6) Formation of active layer

High-molecular PVdF-HFP polyvinylidene fluoride-hexafluoropropylene copolymer, PVdF:HFP = 80:20 (weight ratio), weight-average molecular weight: $1.5 \times 10^6$) was added to acetone and dissolved for at least about 12 hours at 50°C to produce a polymer solution. $Al_2O_3$ powder as inorganic material particles was added to the polymer solution to a weight ratio of polymer:inorganic material particles = 17:83, and a ball mill method was used for fragmentation and dispersion of the inorganic material particles for at least 12 hours to produce a slurry. The particle diameter of the inorganic material particles in the produced slurry was an average of 600 nm.

The three-layer microporous film produced in (5) above was immersed in the slurry for dip coating, after which wire bars each with wire sizes of 0.5 mm were used to adjust the thicknesses of the slurry coating layers on both sides, and the solvent was dried off. The thicknesses of the active layers formed on both sides of the polyolefin porous substrate were 5.0 $\mu$m.

The mixing proportions of the components in the polyolefin three-layer microporous film having the active layers formed as described above, as well as the production conditions and evaluation results, are listed in Tables 1 and 3.

(Example 2)

With 100 parts by weight of a second polyolefin resin comprising 17.5 weight% of ultrahigh molecular weight polyethylene with a Mw of $2.0 \times 10^6$ (UHMwPE), 57.5 weight% of high-density polyethylene with a Mw of $3.0 \times 10^5$ (HDPE: density = 0.955 g/cm$^3$) and 25 weight% of linear low-density polyethylene poly(ethylene-co-hexene) copolymer with an MFR of 135 g/10 min and a melting point of 124°C (used instead of the mixture of Example 1 in "(2) Preparation of second polyolefin solution" of Example 1), there was mixed 0.2 part by weight of the antioxidant tetrakis[methylene-3-(3,5-ditertiary butyl-4-hydroxyphenyl)-propionate]methane, to prepare a mixture.

The rest of the production was according to Example 1, and the mixing proportions of each of the components of the active layer-formed polyolefin three-layer microporous film, and the production conditions and evaluation results, are shown in Tables 1, 2 and 3.

(Example 3)

With 100 parts by weight of a second polyolefin resin comprising 16 weight% of ultrahigh molecular weight polyethylene with a Mw of $2.0 \times 10^6$ (UHMwPE), 66 weight% of high-density polyethylene with a Mw of $3.0 \times 10^5$ (HDPE: density = 0.955 g/cm$^3$), and 18 weight% of polypropylene with a heat of fusion of 96 J/g (used instead of the mixture of Example 1 in "(2) Preparation of second polyolefin solution" of Example 1), there was mixed 0.2 part by weight of the antioxidant tetrakis[methylene-3-(3,5-ditertiary butyl-4-hydroxyphenyl)-propionate]methane, to prepare a mixture.

The rest of the production was according to Example 1, and the mixing proportions of each of the components of the active layer-formed polyolefin three-layer microporous film, and the production conditions and evaluation results, are shown in Tables 1 and 3.

(Example 4)

High-molecular PVdF-CTFE (polyvinylidene fluoride-chlorotrifluoroethylene copolymer, PVdF:CTFE = 96:4 (molar ratio), weight-average molecular weight = $1.2 \times 10^6$) was used instead of high-molecular PVdF-HFP for formation of the active layer according to Example 2.

The rest of the production was according to Example 2, and the mixing proportions of each of the components of the active layer-formed polyolefin three-layer microporous film, and the production conditions and evaluation results, are shown in Table 1.

(Example 5)

For formation of the active layer according to Example 2, the weight ratio of polymer:inorganic material particles was adjusted to 9:91.

The rest of the production was according to Example 2, and the mixing proportions of each of the components of the active layer-formed polyolefin three-layer microporous film, and the production conditions and evaluation results, are shown in Table 1.

(Example 6)

For formation of the active layer according to Example 2, high-molecular PVdF-HFP (polyvinylidene fluoride-hexafluoropropylene copolymer, PVdF:HFP = 80:20 (weight ratio), weight-average molecular weight = $1.5 \times 10^6$) and cyanoethylpullulan were added as polymers to acetone in a weight ratio of 10:2.

The rest of the production was according to Example 2, and the mixing proportions of each of the components of the active layer-formed polyolefin three-layer microporous film, and the production conditions and evaluation results, are shown in Table 1.

(Example 7)

For formation of the active layer according to Example 2, PVdF-HFP (polyvinylidene fluoride-hexafluoropropylene copolymer, PVdF:HFP = 80:20 (weight ratio), weight-average molecular weight = $1.5 \times 10^6$) and cyanoethylpolyvinyl alcohol were added as polymers to acetone in a weight ratio of 10:2.

The rest of the production was according to Example 2, and the mixing proportions of each of the components of the active layer-formed polyolefin three-layer microporous film, and the production conditions and evaluation results, are shown in Table 1.

(Example 8)

For formation of the active layer according to Example 2, high-molecular PVdF-HFP (polyvinylidene fluoride-hexafluoropropylene copolymer, PVdF:HFP = 80:20 (weight ratio), weight-average molecular weight = $0.5 \times 10^6$) was used instead of high-molecular PVdF-HFP (polyvinylidene fluoride-hexafluoropropylene copolymer, PVdF:HFP = 80:20 (weight ratio), weight-average molecular weight = $1.5 \times 10^6$).

The rest of the production was according to Example 2, and the mixing proportions of each of the components of the active layer-formed polyolefin three-layer microporous film, and the production conditions and evaluation results, are shown in Table 1.

(Example 9)

For formation of the active layer according to Example 2, AlO(OH) powder (boehmite, mean particle diameter: 1.0 $\mu$m) was used as the inorganic material particles instead of $Al_2O_3$ powder.

The rest of the production was according to Example 2, and the mixing proportions of each of the components of the active layer-formed polyolefin three-layer microporous film, and the production conditions and evaluation results, are shown in Table 1.

(Example 10)

For formation of the active layer according to Example 2, $BaTiO_3$ powder (barium titanate, mean particle diameter: 0.6 $\mu$m) was used as the inorganic material particles instead of $Al_2O_3$ powder.

The rest of the production was according to Example 2, and the mixing proportions of each of the components of the active layer-formed polyolefin three-layer microporous film, and the production conditions and evaluation results, are shown in Table 1.

(Example 11)

For "(1) Preparation of first polyolefin solution" in Example 2, the mixture used comprised 100 parts by weight of a first polyolefin resin comprising 16 weight% of polypropylene with a Mw of $1.2 \times 10^6$ (PP: melting point = 162°C), 64 weight% of high-density polyethylene with a Mw of $0.74 \times 10^6$ (HDPE: density = 0.955 g/cm$^3$, melting point = 135°C), and 20 weight% of silica powder (mean particle diameter: 15 nm), with 0.2 part by weight of the antioxidant tetrakis[methylene-3-(3,5-ditertiary butyl-4-hydroxyphenyl)-propionate]methane. The rest of the production was according to Example 2, and the mixing proportions of each of the components of the active layer-formed polyolefin three-layer microporous film, and the production conditions and evaluation results, are shown in Table 1.

(Comparative Example 1)

The rest of the production was according to Example 1, except that the active layer in Example 1 was not formed, and the mixing proportions of each of the components of the active layer-formed polyolefin three-layer microporous film, and the production conditions and evaluation results, are shown in Table 1.

(Comparative Example 2)

For "(1) Preparation of first polyolefin solution in Example 1, production was in the same manner as Example 1 except that 100 parts by weight of a first polyolefin resin comprising high-density polyethylene with a Mw of $0.74 \times 10^6$ (HDPE: density =0.955 g/cm$^3$, melting point = 135°C) was used instead of 100 parts by weight of the first polyolefin resin comprising 20 weight% of polypropylene with a Mw of $1.2 \times 10^6$ (PP: melting point = 162°C) and 80 weight% of high-density polyethylene with a Mw of $0.74 \times 10^6$ (HDPE: density = 0.955 g/cm$^3$, melting point = 135°C), and the mixing proportions of each of the components of the polyolefin three-layer microporous film, and the production conditions and evaluation results, are shown in Table 1.

(Comparative Example 3)

For "(1) Preparation of first polyolefin solution in Example 1, production was in the same manner as Example 1 except that 100 parts by weight of a first polyolefin resin comprising polypropylene with a Mw of $1.2 \times 10^6$ (PP: melting point = 162°C) was used instead of 100 parts by weight of the first polyolefin resin comprising 20 weight% of polypropylene with a Mw of $1.2 \times 10^6$ (PP: melting point = 162°C) and 80 weight% of high-density polyethylene with a Mw of $0.74 \times 10^6$ (HDPE: density = 0.955 g/cm$^3$, melting point = 135°C), and the mixing proportions of each of the components of the polyolefin three-layer microporous film, and the production conditions and evaluation results, are shown in Table 1.

(Comparative Example 4)

For "(6) Formation of active layer" in Example 1, production was in the same manner as Example 1, except that PVdF (polyvinylidene fluoride, weight-average molecular weight = $0.35 \times 10^6$) was used instead of PVdF-HFP, and the mixing proportions of each of the components of the active layer-formed polyolefin three-layer microporous film, and the production conditions and evaluation results, are shown in Table 1.

(Example 12) (not according to the invention)

For "Preparation of first polyolefin solution" in Example 2, the mixture was prepared by mixing 0.2 part by weight of the antioxidant tetrakis[methylene-3-(3,5-ditertiary butyl-4-hydroxyphenyl)-propionate]methane with 100 parts by weight of a first polyolefin resin comprising 20 weight% of polypropylene with a Mw of $2.0 \times 10^6$ (PP: melting point = 162°C) and 80 weight% of high-density polyethylene with a Mw of $0.56 \times 10^6$ (HDPE: density = 0.955 g/cm$^3$, melting point = 135°C).
The rest of the production was according to Example 2, and the mixing proportions of each of the components of the active layer-formed polyolefin three-layer microporous film, and the production conditions and evaluation results, are shown in Table 2.

(Example 13)

For "Preparation of first polyolefin solution" in Example 2, the mixture was prepared by mixing 0.2 part by weight of the antioxidant tetrakis[methylene-3-(3,5-ditertiary butyl-4-hydroxyphenyl)-propionate]methane with 100 parts by weight of a first polyolefin resin comprising 20 weight% of polypropylene with a Mw of $0.6 \times 10^6$ (PP: melting point = 162°C) and 80 weight% of high-density polyethylene with a Mw of $0.86 \times 10^6$ (HDPE: density = 0.955 g/cm$^3$, melting point = 135°C).
The rest of the production was according to Example 2, and the mixing proportions of each of the components of the active layer-formed polyolefin three-layer microporous film, and the production conditions and evaluation results, are shown in Table 2.

(Example 14)

For "(1) Preparation of first polyolefin solution" in Example 1, the mixture was prepared by mixing 0.2 part by weight of the antioxidant tetrakis[methylene-3-(3,5-ditertiary butyl-4-hydroxyphenyl)-propionate]methane with 100 parts by weight of a first polyolefin resin comprising 20 weight% of polypropylene with a Mw of $1.2 \times 10^6$ (PP: melting point = 162°C), 55 weight% of high-density polyethylene with a Mw of $0.74 \times 10^6$ (HDPE: density = 0.955 g/cm$^3$, melting point = 135°C) and 25 wt% of poly(ethylene-co-hexene) copolymer, as linear low-density polyethylene with an MFR of 135 g/10 min and a melting point of 124°C.
The rest of the production was according to Example 1, and the mixing proportions of each of the components of the active layer-formed polyolefin three-layer microporous film, and the production conditions and evaluation results, are shown in Table 3.

(Example 15)

For "(1) Preparation of first polyolefin solution" in Example 1, the mixture used comprised 0.2 part by weight of the antioxidant tetrakis[methylene-3-(3,5-ditertiary butyl-4-hydroxyphenyl)-propionate]methane combined with 100 parts by weight of a first polyolefin resin comprising 82 weight% of high-density polyethylene with a Mw of $0.74 \times 10^6$ (HDPE: density = 0.955 g/cm$^3$, melting point = 135°C) and 18 weight% of polypropylene with a heat of fusion of 96 J/g.
The rest of the production was according to Example 1, and the mixing proportions of each of the components of the active layer-formed polyolefin three-layer microporous film, and the production conditions and evaluation results, are shown in Table 3.

(Example 16)

For "(1) Preparation of first polyolefin solution" in Example 1, there was used 100 parts by weight of a first polyolefin resin comprising 35 weight% of polypropylene with a Mw of $1.2 \times 10^6$ (PP: melting point = 162°C) and 65 weight% of high-density polyethylene with a Mw of $0.74 \times 10^6$ (HDPE: density = 0.955 g/cm$^3$, melting point = 135°C). The rest of the production was according to Example 1, and the mixing proportions of each of the components of the active layer-formed polyolefin three-layer microporous film, and the production conditions and evaluation results, are shown in Table 1.

[Table 1]

Example 12 is not in accordance with the invention.

| | | | Example 1 | Example 2 | Example 3 | Example 4 | Example 5 | Example 6 | Example 7 | Example 8 | Example 9 | Example 10 | Example 11 | Example 16 | Comp. Example 1 | Comp. Example 2 | Comp. Example 3 | Comp. Example 4 |
|---|---|---|---|---|---|---|---|---|---|---|---|---|---|---|---|---|---|---|
| First layer | HDPE | Weight% | 80 | 80 | 80 | 80 | 80 | 80 | 80 | 80 | 80 | 80 | 64 | 65 | 80 | 100 | None | 80 |
| | PP | Weight% | 20 | 20 | 20 | 20 | 20 | 20 | 20 | 20 | 20 | 20 | 16 | 35 | 20 | None | 100 | 20 |
| | Other components | Other components/ weight% | | | | | | | | | | | Silica/ 20 | | | | | |
| Second layer | UHMwPE | Weight% | 40 | 17.5 | 16 | 17.5 | 17.5 | 17.5 | 17.5 | 17.5 | 17.5 | 17.5 | 17.5 | 40 | 40 | 40 | 40 | 40 |
| | HDPE | Weight% | 60 | 57.5 | 66 | 57.5 | 57.5 | 57.5 | 57.5 | 57.5 | 57.5 | 57.5 | 57.5 | 60 | 60 | 60 | 60 | 60 |
| | Other components | Other components/ weight% | | A/25 | B/18 | A/25 | A/25 | A/25 | A/25 | A/25 | A/25 | A/25 | A/25 | | | | | |
| Active layer | Binder | Type | PVDF-HFP | PVDF-HFP | PVDF-HFP | PVDF-CTFE | PVDF-HFP | PVDF-HFP | PVDF-HFP | PVDF-HFP | PVDF-HFP | PVDF-HFP | PVDF-HFP | PVDF-HFP | None | PVDF-HFP | PVDF-HFP | PVDF |
| | | Mw ($*10^6$) | 1.5 | 1.5 | 1.5 | 1.2 | 1.5 | 1.5 | 1.5 | 0.5 | 1.5 | 1.5 | 1.5 | 1.5 | - | 1.5 | 1.5 | 0.35 |
| | Inorganic particles | Type | Al2O3 | Al2O3 | Al2O3 | Al2O3 | Al2O3 | Al2O3 | Al2O3 | Al2O3 | AlOOH | BaTiO3 | Al2O3 | Al2O3 | - | Al2O3 | Al2O3 | Al2O3 |
| | Binder/inorganic particle weight ratio | | 17/83 | 17/83 | 17/83 | 17/83 | 9/91 | 17/83 | 17/83 | 17/83 | 17/83 | 17/83 | 17/83 | 17/83 | - | 17/83 | 17/83 | 17/83 |
| | Other components | | | | | | | CEP | CEPVA | | | | | | | | | |

EP 3 340 342 B1

(continued)

| Example 12 is not in accordance with the invention. | | | | | | | | | | | | | | | | | |
|---|---|---|---|---|---|---|---|---|---|---|---|---|---|---|---|---|---|
| | | Example 1 | Example 2 | Example 3 | Example 4 | Example 5 | Example 6 | Example 7 | Example 8 | Example 9 | Example 10 | Example 11 | Example 16 | Comp. Example 1 | Comp. Example 2 | Comp. Example 3 | Comp. Example 4 |
| Evaluation results | Active layer/substrate peel strength | B | B | B | B | B | B | B | B | B | B | B | B | - | C | A | B |
| | Battery windability (pin removability) | A | A | A | A | B | A | A | A | A | A | A | A | C | A | A | A |
| | Thermal shock properties | A | A | A | A | A | A | A | B | A | A | A | B | C | A | B | C |
| | Low-temperature cycle characteristic | B | B | B | B | B | A | A | B | B | B | A | B | B | B | C | B |
| A: Linear low-density polyethylene, B: Polypropylene with heat of fusion: 96 J/g CEPVA: Cyanoethylpolyvinyl alcohol, CEP: Cyanoethylpullulan | | | | | | | | | | | | | | | | | |

26

[Table 2]

| | | | Example 2 | Example 12 | Example 13 |
|---|---|---|---|---|---|
| First layer | HDPE | Mw ($*10^6$) | 0.74 | 0.56 | 0.86 |
| | | Weight% | 80 | 80 | 80 |
| | PP | Mw ($*10^6$) | 1.2 | 2 | 0.6 |
| | | Weight% | 20 | 20 | 20 |
| | Mw ratio of PE/PP | | 0.62 | 0.28 | 1.43 |
| | Other components | | | | |
| Second layer | UHMwPE | | 17.5 | 17.5 | 17.5 |
| | HDPE | | 57.5 | 57.5 | 57.5 |
| | Other components | | A/25 | A/25 | A/25 |
| Active layer | Binder | Type | PVDF-HFP | PVDF-HFP | PVDF-HFP |
| | | Mw ($*10^6$) | 1.5 | 1.5 | 1.5 |
| | Binder additive | | | | |
| | Inorganic particle | | $Al_2O_3$ | $Al_2O_3$ | $Al_2O_3$ |
| | Binder/inorganic particle weight ratio | | 17/83 | 17/83 | 17/83 |
| Evaluation results | Variation in peel strength between active layer and substrate | | A | B | A |
| A: Linear low-density polyethylene Example 12 is not in accordance with the invention. | | | | | |

[Table 3]

| | | | Example 1 | Example 2 | Example 3 | Example 14 | Example 15 |
|---|---|---|---|---|---|---|---|
| First layer | HDPE | Weight% | 80 | 80 | 80 | 55 | 82 |
| | PP | Weight% | 20 | 20 | 20 | 20 | |
| | Other components | Other components /weight% | | | | A/25 | B/18 |
| Second layer | UHMwPE | Weight% | 40 | 17.5 | 16 | 40 | 40 |
| | HDPE | Weight% | 60 | 57.5 | 66 | 60 | 60 |
| | Other components | Other components /weight% | | A/25 | B/18 | | |
| Active layer | Binder | Type | PVDF-HFP | PVDF-HFP | PVDF-HFP | PVDF-HFP | PVDF-HFP |
| | | Mw ($*10^6$) | 1.5 | 1.5 | 1.5 | 1.5 | 1.5 |
| | Binder additive | | | | | | |
| | Inorganic particles | Type | $Al_2O_3$ | $Al_2O_3$ | $Al_2O_3$ | $Al_2O_3$ | $Al_2O_3$ |
| | Binder/inorganic particle weight ratio | | 17/83 | 17/83 | 17/83 | 17/83 | 17/83 |

(continued)

| | | Example 1 | Example 2 | Example 3 | Example 14 | Example 15 |
|---|---|---|---|---|---|---|
| Evaluation results | Impact resistance | C | A | A | B | B |
| A: Linear low-density polyethylene, B: Polypropylene with heat of fusion: 96 J/g | | | | | | |

[Explanation of Symbols]

10    Pin
11    Pin I
12    Pin II
13    Wound up sample
20    Deadweight
21    Round bar
22    Sample

**Claims**

1.  A separator for a power storage device, wherein the separator is **characterized by** comprising:

    a polyolefin multilayer microporous film comprising polyethylene and polypropylene, the polypropylene concentration at the outermost sections being higher than the polypropylene concentration at the innermost section, and the polyethylene concentration at the outermost sections being lower than the polyethylene concentration at the innermost section, wherein the outermost sections of the polyolefin multilayer microporous film are the cross-sectional portions of the two outer films, when the multi-layer microporous film has been divided into 3 portions of equal thickness in the direction of lamination, and the innermost section is the cross-sectional portion of the film on the inside, and
    an active layer laminated on at least one side of the microporous film,

      wherein the active layer contains inorganic particles and at least one fluorine-containing vinyl compound selected from polyvinylidene-hexafluoropropylene fluoride (PVdF-HFP) and polyvinylidene fluoride-chlorotrifluoroethylene (PVdF-CTFE),
      wherein the polyolefin multilayer microporous film is laminated in the order of a first microporous layer, a second microporous layer and a first microporous layer,
      wherein each first microporous layer contains polyethylene and polypropylene,
      wherein the second microporous layer contains polyethylene,
      wherein the proportion of polypropylene with respect to 100 weight% as the total polyolefin resin in the first microporous layer is 1 to 50 weight%, and
      wherein the ratio of the weight-average molecular weights of the polyethylene and polypropylene in the first microporous layer adhering to the active layer determined as described in the description and calculated using the formula

    $$\text{MwE (weight-average molecular weight of polyethylene)/MwP (weight-average molecular weight of polypropylene)}$$

    is 0.6 to 1.5.

2.  The separator for a power storage device according to claim 1, wherein the proportion of polypropylene with respect to 100 weight% as the total polyolefin resin in the first microporous layer is 5 to 50 weight%.

3. The separator for a power storage device according to claim 1 or claim 2, wherein the first polyolefin resin or the second polyolefin resin comprises linear low-density polyethylene.

4. The separator for a power storage device according to claim 3, wherein the linear low-density polyethylene is poly(ethylene-co-1-hexene).

5. The separator for a power storage device according to any one of claims 1 to 4, wherein the first microporous layer further comprises one or more selected from the group consisting of silica, alumina and titania.

6. The separator for a power storage device according to any one of claims 1 to 5, wherein the weight ratio of the fluorine-containing vinyl compound and the inorganic particles is 5/95 to 80/20.

7. The separator for a power storage device according to any one of claims 1 to 6, wherein the active layer further contains at least one selected from among cyanoethylpullulan, cyanoethylpolyvinyl alcohol, cyanoethyl cellulose and cyanoethylsucrose.

8. A laminated body comprising the separator for a power storage device according to any one of claims 1 to 7, a positive electrode, and a negative electrode.

9. A roll in which the laminated body according to claim 8 is wound.

10. A secondary battery comprising the laminated body according to claim 8 or the roll according to claim 9, and an electrolyte solution.

11. Use of a polyolefin multilayer microporous film comprising polyethylene and polypropylene, the polypropylene concentration at the outermost sections being higher than the polypropylene concentration at the innermost section, and the polyethylene concentration at the outermost sections being lower than the polyethylene concentration at the innermost section, wherein the outermost sections of the polyolefin multilayer microporous film are the cross-sectional portions of the two outer films, when the multi-layer microporous film has been divided into 3 portions of equal thickness in the direction of lamination, and the innermost section is the cross-sectional portion of the film on the inside and

an active layer laminated on at least one side of the microporous film,

wherein the active layer contains inorganic particles and at least one fluorine-containing vinyl compound selected from polyvinylidene-hexafluoropropylene fluoride (PVdF-HFP) and polyvinylidene fluoride-chlorotrifluoroethylene (PVdF-CTFE),
wherein the polyolefin multilayer microporous film is laminated in the order of a first microporous layer, a second microporous layer and a first microporous layer,

wherein each first microporous layer contains polyethylene and polypropylene,
wherein the second microporous layer contains polyethylene,
wherein the proportion of polypropylene with respect to 100 weight% as the total polyolefin resin in the first microporous layer is 1 to 50 weight%, and

wherein the ratio of the weight-average molecular weights of the polyethylene and polypropylene in the first microporous layer adhering to the active layer determined as described in the description and calculated using the formula

$$\text{MwE (weight-average molecular weight of polyethylene)/MwP (weight-average molecular weight of polypropylene)}$$

is 0.6 to 1.5, as a separator in a power storage device.

**Patentansprüche**

1. Separator für eine Stromspeichervorrichtung, wobei der Separator **dadurch gekennzeichnet ist, dass** er Folgendes umfasst:

   eine mehrschichtige mikroporöse Polyolefinfolie, die Polyethylen und Polypropylen umfasst, wobei die Polypropylenkonzentration in den äußersten Abschnitten höher ist als die Polypropylenkonzentration im innersten Abschnitt und die Polyethylenkonzentration in den äußersten Abschnitten geringer ist als die Polyethylenkonzentration im innersten Abschnitt, wobei die äußersten Abschnitte der mehrschichtigen mikroporösen Polyolefinfolie die Querschnittsteile der zwei äußeren Folien sind, wenn die mehrschichtige mikroporöse Folie in der Richtung der Laminierung in 3 Teile gleicher Dicke aufgeteilt wurde, und der innerste Abschnitt der Querschnittsteil der Folie auf der Innenseite ist; und
   eine aktive Schicht, die auf wenigstens eine Seite der mikroporösen Folie laminiert ist;
   wobei die aktive Schicht anorganische Teilchen und wenigstens eine fluorhaltige Vinylverbindung, die aus Polyvinyliden-Hexafluorpropylenfluorid (PVdF-HFP) und Polyvinylidenfluorid-Chlortrifluorethylen (PVdF-CTFE) ausgewählt ist, enthält;
   wobei die mehrschichtige mikroporöse Polyolefinfolie in der Reihenfolge einer ersten mikroporösen Schicht, einer zweiten mikroporösen Schicht und einer ersten mikroporösen Schicht laminiert ist;
   wobei jede erste mikroporöse Schicht Polyethylen und Polypropylen enthält;
   wobei die zweite mikroporöse Schicht Polyethylen enthält;
   wobei der Anteil des Polypropylens, bezogen auf 100 Gew.-% als gesamtes Polyolefinharz in der ersten mikroporösen Schicht, 1 bis 50 Gew.-% beträgt; und
   wobei das Verhältnis der Gewichtsmittel der Molekulargewichte des Polyethylens und Polypropylens in der ersten mikroporösen Schicht, die an der aktiven Schicht haftet, welches so bestimmt wird, wie es in der Beschreibung beschrieben ist, und mit Hilfe der Formel

$$\text{MwE (Gewichtsmittel des Molekulargewichts von Polyethylen)/}$$

$$\text{MwP (Gewichtsmittel des Molekulargewichts von Polypropylen)}$$

   berechnet wird, 0,6 bis 1,5 beträgt.

2. Separator für eine Stromspeichervorrichtung gemäß Anspruch 1, wobei der Anteil des Polypropylens, bezogen auf 100 Gew.-% als gesamtes Polyolefinharz in der ersten mikroporösen Schicht, 5 bis 50 Gew.-% beträgt.

3. Separator für eine Stromspeichervorrichtung gemäß Anspruch 1 oder 2, wobei das erste Polyolefinharz oder das zweite Polyolefinharz lineares Polyethylen geringer Dichte umfasst.

4. Separator für eine Stromspeichervorrichtung gemäß Anspruch 3, wobei es sich bei dem linearen Polyethylen geringer Dichte um Poly(ethylen-co-1-hexen) handelt.

5. Separator für eine Stromspeichervorrichtung gemäß einem der Ansprüche 1 bis 4, wobei die erste mikroporöse Schicht weiterhin eines oder mehrere umfasst, die aus der Gruppe ausgewählt sind, die aus Siliciumoxid, Aluminiumoxid und Titanoxid besteht.

6. Separator für eine Stromspeichervorrichtung gemäß einem der Ansprüche 1 bis 5, wobei das Gewichtsverhältnis der fluorhaltigen Vinylverbindung zu den anorganischen Teilchen 5/95 bis 80/20 beträgt.

7. Separator für eine Stromspeichervorrichtung gemäß einem der Ansprüche 1 bis 6, wobei die aktive Schicht weiterhin wenigstens eines enthält, das aus Cyanoethylpullulan, Cyanethylpolyvinylalkohol, Cyanethylcellulose und Cyanethylsaccharose ausgewählt ist.

8. Laminierter Körper, der den Separator für eine Stromspeichervorrichtung gemäß einem der Ansprüche 1 bis 7, eine positive Elektrode und eine negative Elektrode umfasst.

9. Rolle, zu der der laminierte Körper gemäß Anspruch 8 gewickelt wird.

10. Sekundärbatterie, die den laminierten Körper gemäß Anspruch 8 oder die Rolle gemäß Anspruch 9 sowie eine Elektrolytlösung umfasst.

11. Verwendung einer mehrschichtigen mikroporösen Polyolefinfolie, die Polyethylen und Polypropylen umfasst, wobei die Polypropylenkonzentration in den äußersten Abschnitten höher ist als die Polypropylenkonzentration im innersten Abschnitt und die Polyethylenkonzentration in den äußersten Abschnitten geringer ist als die Polyethylenkonzentration im innersten Abschnitt, wobei die äußersten Abschnitte der mehrschichtigen mikroporösen Polyolefinfolie die Querschnittsteile der zwei äußeren Folien sind, wenn die mehrschichtige mikroporöse Folie in der Richtung der Laminierung in 3 Teile gleicher Dicke aufgeteilt wurde, und der innerste Abschnitt der Querschnittsteil der Folie auf der Innenseite ist; und

eine aktive Schicht, die auf wenigstens eine Seite der mikroporösen Folie laminiert ist; wobei die aktive Schicht anorganische Teilchen und wenigstens eine fluorhaltige Vinylverbindung, die aus Polyvinyliden-Hexafluorpropylenfluorid (PVdF-HFP) und Polyvinylidenfluorid-Chlortrifluorethylen (PVdF-CTFE) ausgewählt ist, enthält;

wobei die mehrschichtige mikroporöse Polyolefinfolie in der Reihenfolge einer ersten mikroporösen Schicht, einer zweiten mikroporösen Schicht und einer ersten mikroporösen Schicht laminiert ist;

wobei jede erste mikroporöse Schicht Polyethylen und Polypropylen enthält;

wobei die zweite mikroporöse Schicht Polyethylen enthält;

wobei der Anteil des Polypropylens, bezogen auf 100 Gew.-% als gesamtes Polyolefinharz in der ersten mikroporösen Schicht, 1 bis 50 Gew.-% beträgt; und

wobei das Verhältnis der Gewichtsmittel der Molekulargewichte des Polyethylens und Polypropylens in der ersten mikroporösen Schicht, die an der aktiven Schicht haftet, welches so bestimmt wird, wie es in der Beschreibung beschrieben ist, und mit Hilfe der Formel

$$\text{MwE (Gewichtsmittel des Molekulargewichts von Polyethylen)}/$$

$$\text{MwP (Gewichtsmittel des Molekulargewichts von Polypropylen)}$$

berechnet wird, 0,6 bis 1,5 beträgt,
als Separator in einer Stromspeichervorrichtung.

**Revendications**

1. Séparateur pour un dispositif de stockage d'énergie, dans lequel le séparateur est **caractérisé en ce qu'**il comprend :

un film microporeux multicouche de polyoléfine comprenant du polyéthylène et polypropylène, la concentration en polypropylène sur les sections extérieures étant supérieure à la concentration en polypropylène sur la section intérieure, et la concentration en polyéthylène sur les sections extérieures étant inférieure à la concentration en polyéthylène sur la section intérieure, dans lequel les sections extérieures du film microporeux multicouche de polyoléfine sont les sections transversales des deux films externes, lorsque le film microporeux multicouche a été divisé en 3 portions d'épaisseur égale dans la direction de stratification, et la section intérieure est la portion transversale du film sur l'intérieur, et

une couche active stratifiée sur au moins un côté du film microporeux,

dans lequel la couche active contient des particules inorganiques et au moins un composé de vinyle contenant du fluor choisi parmi le poly(fluorure de vinylidène)-hexafluoropropylène (PVdF-HFP) et poly(fluorure de vinylidène)-chlorotrifluoroéthylène (PVdF-CTFE),

dans lequel le film microporeux multicouche de polyoléfine est stratifié dans l'ordre d'une première couche microporeuse, une seconde couche microporeuse et une première couche microporeuse,

dans lequel chaque première couche microporeuse contient du polyéthylène et polypropylène,

dans lequel la seconde couche microporeuse contient du polyéthylène,

dans lequel la proportion de polypropylène par rapport à 100 % en masse comme la résine de polyoléfine totale dans la première couche microporeuse est de 1 à 50 % en masse, et

dans lequel le rapport des masses moléculaires moyennes en masse du polyéthylène et polypropylène dans la première couche microporeuse adhérant à la couche active déterminé comme décrit dans la description et calculé en utilisant la formule

## MwE (masse moléculaire moyenne en masse de polyéthylène)/
## MwP (masse moléculaire moyenne en masse de polypropylène)

est de 0,6 à 1,5.

**2.** Séparateur pour un dispositif de stockage d'énergie selon la revendication 1, dans lequel la proportion de polypropylène par rapport à 100 % en masse comme la résine de polyoléfine totale dans la première couche microporeuse est de 5 à 50 % en masse.

**3.** Séparateur pour un dispositif de stockage d'énergie selon la revendication 1 ou revendication 2, dans lequel la première résine de polyoléfine ou la seconde résine de polyoléfine comprend du polyéthylène basse densité linéaire.

**4.** Séparateur pour un dispositif de stockage d'énergie selon la revendication 3, dans lequel le polyéthylène basse densité linéaire est le poly(éthylène-co-1-hexène).

**5.** Séparateur pour un dispositif de stockage d'énergie selon l'une quelconque des revendications 1 à 4, dans lequel la première couche microporeuse comprend de plus un ou plusieurs choisis dans le groupe consistant en silice, alumine et oxyde de titane.

**6.** Séparateur pour un dispositif de stockage d'énergie selon l'une quelconque des revendications 1 à 5, dans lequel le rapport de masse du composé de vinyle contenant du fluor et des particules inorganiques est de 5/95 à 80/20.

**7.** Séparateur pour un dispositif de stockage d'énergie selon l'une quelconque des revendications 1 à 6, dans lequel la couche active contient de plus au moins un choisi parmi le cyanoéthylpullulane, alcool cyanoéthylpolyvinylique, cyanoéthylcellulose et cyanoéthylsaccharose.

**8.** Corps stratifié comprenant le séparateur pour un dispositif de stockage d'énergie selon l'une quelconque des revendications 1 à 7, une électrode positive, et une électrode négative.

**9.** Rouleau sur lequel le corps stratifié selon la revendication 8 est enroulé.

**10.** Accumulateur secondaire comprenant le corps stratifié selon la revendication 8 ou le rouleau selon la revendication 9, et une solution d'électrolyte.

**11.** Utilisation d'un film microporeux multicouche de polyoléfine comprenant du polyéthylène et polypropylène, la concentration en polypropylène sur les sections extérieures étant supérieure à la concentration en polypropylène sur la section intérieure, et la concentration en polyéthylène sur les sections extérieures étant inférieure à la concentration en polyéthylène sur la section intérieure, dans laquelle les sections extérieures du film microporeux multicouche de polyoléfine sont les portions transversales des deux films externes, lorsque le film microporeux multicouche a été divisé en 3 portions d'épaisseur égale dans la direction de stratification, et la section intérieure est la portion transversale du film sur l'intérieur et
une couche active stratifiée sur au moins un côté du film microporeux,

dans laquelle la couche active contient des particules inorganiques et au moins un composé de vinyle contenant du fluor choisi parmi le poly(fluorure de vinylidène)-hexafluoropropylène (PVdF-HFP) et le poly(fluorure de vinylidène)-chlorotrifluoroéthylène (PVdF-CTFE),
dans laquelle le film microporeux multicouche de polyoléfine est stratifié dans l'ordre d'une première couche microporeuse, une seconde couche microporeuse et une première couche microporeuse,
dans laquelle chaque première couche microporeuse contient du polyéthylène et polypropylène,
dans laquelle la seconde couche microporeuse contient du polyéthylène,
dans laquelle la proportion de polypropylène par rapport à 100 % en masse comme la résine de polyoléfine totale dans la première couche microporeuse est de 1 à 50 % en masse, et
dans laquelle le rapport des masses moléculaires moyennes en masse des polyéthylène et polypropylène dans la première couche microporeuse adhérant à la couche active déterminé comme décrit dans la description et calculé en utilisant la formule

# MwE (masse moléculaire moyenne en masse de polyéthylène)/ MwP (masse moléculaire moyenne en masse de polypropylène)

est de 0,6 à 1,5, comme un séparateur dans un dispositif de stockage d'énergie.

# FIG. 1

(A)

400g

10

13

(B)

13

11

12

# FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015194667 A
- WO 2013146403 A
- WO 2015190264 A
- JP 2012061791 A
- US 2011045338 A1
- US 2009098450 A1